(19) Europäisches Patentamt
European Patent Office
Office européen des brevets

(11) **EP 4 556 176 A1**

(12) **EUROPÄISCHE PATENTANMELDUNG**

(43) Veröffentlichungstag:
**21.05.2025 Patentblatt 2025/21**

(21) Anmeldenummer: **24210282.0**

(22) Anmeldetag: **31.10.2024**

(51) Internationale Patentklassifikation (IPC):
**B25J 15/02** (2006.01)

(52) Gemeinsame Patentklassifikation (CPC):
**B25J 15/026; B25J 9/102; F16H 49/00**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **20.11.2023 DE 102023132197**

(71) Anmelder: SCHUNK SE & Co. KG
**Spanntechnik Greiftechnik**
**Automatisierungstechnik**
**74348 Lauffen am Neckar (DE)**

(72) Erfinder:
• **Gotthardt, Michael**
**71638 Ludwigsburg (DE)**
• **Kilpper, Stephan**
**74321 Bietigheim-Bissingen (DE)**
• **Schleusener, Tobias**
**75031 Eppingen (DE)**
• **Stanicki, Andreas**
**74226 Nordheim (DE)**

(74) Vertreter: **DREISS Patentanwälte PartG mbB**
**Friedrichstraße 6**
**70174 Stuttgart (DE)**

(54) **GREIF- UND/ODER SPANNVORRICHTUNG MIT EINEM HEMMENDEN GETRIEBE**

(57) Die Erfindung betrifft eine Greif- oder Spannvorrichtung (10) mit einem Grundgehäuse (12), mit wenigstens einem im Grundgehäuse (12) verfahrbar angeordneten Backenelement (14) und mit einer Getriebeeinheit (18), wobei die Getriebeeinheit (18) eine Eingangswelle (24) und eine Ausgangswelle (28) aufweist, wobei die Eingangswelle (24) mit einem Antrieb (16) koppelbar oder gekoppelt ist und wobei die Ausgangswelle (28) mit dem wenigstens einen Backenelement (14) koppelbar oder gekoppelt ist, und wobei die Getriebeeinheit (18) als ein hemmendes Planetengetriebe (18A) ausgebildet ist.

Fig. 1

EP 4 556 176 A1

**Beschreibung**

Die Erfindung betrifft eine Greif- oder Spannvorrichtung mit einem Grundgehäuse, mit wenigstens einem im Grundgehäuse verfahrbar angeordneten Backenelement und mit einer Getriebeeinheit, wobei die Getriebeeinheit eine Eingangswelle und eine Ausgangswelle aufweist, wobei die Eingangswelle mit einem Antrieb koppelbar oder gekoppelt ist und wobei die Ausgangswelle mit dem wenigstens einen Backenelement koppelbar oder gekoppelt ist.

Aus der EP 190 55 49 B1 ist eine Spann- oder Greifvorrichtung mit einem Schneckengetriebe bekannt, wobei der Steigungswinkel der Schrägverzahnung derart ausgebildet ist, dass aufgrund einer Selbsthemmung bei einem nicht betätigten Antrieb eine Positionserhaltung des Backenelements realisiert werden kann. Mit einem Schneckengetriebe gehen die Nachteile eines schlechten Wirkungsgrads, der Notwendigkeit einer axialen Einstellung und Lagerungsanforderungen aufgrund der hohen Axialkräfte einher. Aus der JP 31 56 145 U ist eine Greifvorrichtung mit einem selbsthemmenden Schneckengetriebe bekannt.

Der Erfindung liegt folglich die Aufgabe zugrunde, eine Greif- oder Spannvorrichtung bereitzustellen, welche die Nachteile aus dem Stand der Technik beheben, insbesondere eine zuverlässige Positionserhaltung des Backenelements auch bei einem nicht betätigten Antrieb gewährleistet.

Die der Erfindung zugrundeliegende Aufgabe wird durch eine Greif- oder Spannvorrichtung mit den Merkmalen des Anspruchs 1 gelöst. Demnach ist die Getriebeeinheit als ein hemmendes, insbesondere teilhemmendes /oder selbsthemmendes, Planetengetriebe ausgebildet.

Aufgrund des hemmenden Planetengetriebes kann gewährleistet werden, dass auch bei einem nicht betätigten Antrieb ein Zurückdrehen der Getriebeeinheit bzw. ein Zurückbewegen des Backenelements nicht (zerstörungsfrei) möglich ist. Zudem weist das Planetengetriebe gegenüber einem Schneckengetriebe einen höheren Wirkungsgrad, eine höhere Kraftübertragung, eine kompaktere Bauform und eine höhere Laufruhe auf.

Im Sinne der Erfindung ist unter einem "hemmenden Planetengetriebe" entweder ein "selbsthemmendes Planetengetriebe" oder ein "teilhemmendes Planetengetriebe" zu verstehen. Im Sinne der Erfindung ist unter einem "selbsthemmenden Planetengetriebe" zu verstehen, dass ein Lastmoment am eigentlichen Abtrieb, der dadurch zum Antrieb wird, bis zu einer Zerstörungsgrenze erhöht werden kann, ohne dass das Lastmoment zu einer Bewegung des Planetengetriebes, insbesondere der Eingangswelle, führt. Die Erhöhung des Lastmoments erhöht dabei unter anderem die entgegenwirkenden Reibungskräfte. Im Sinne der Erfindung ist unter einem "teilhemmenden Planetengetriebe" zu verstehen, dass das Planetengetriebe abtriebsseitig bis zu einem Grenzwert eines Lastmoments nicht rückdrehbar ist. Das Lastmoment entsteht durch die in der Nachgiebigkeit der Finger, des Werkstücks, des Antriebsstrangs etc. gespeicherte Federenergie.

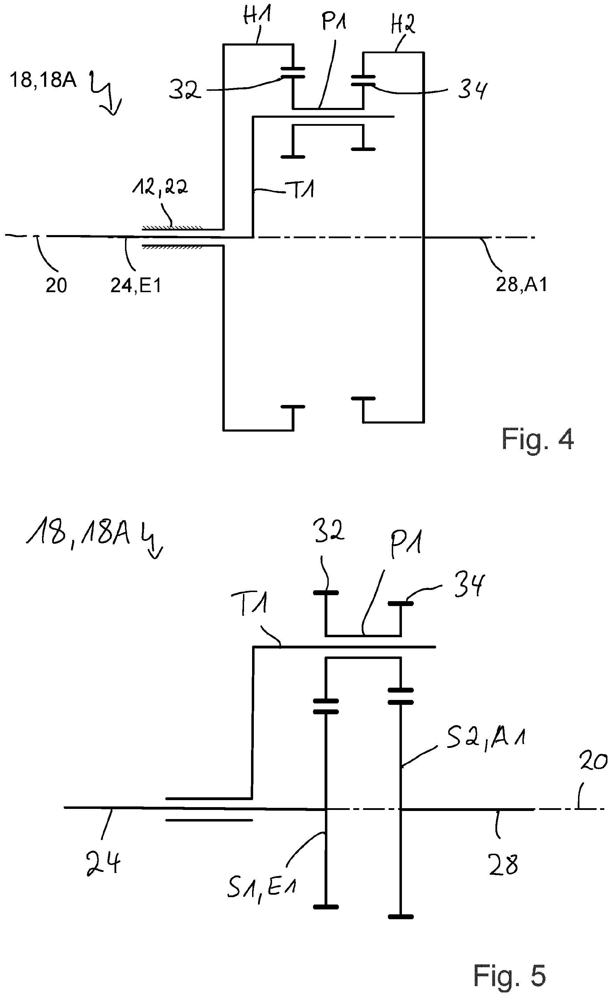

Nachfolgend wird der Unterschied zwischen der Selbsthemmung und der Teilhemmung eines Getriebes hergeleitet, welches in Fig. 4 dargestellt ist. Mit diesem oder einem ähnlichen Ansatz kann auch der Unterschied anderer Getriebe, wie z.B. ein Planetengetriebe, ein Koppelumlaufgetriebe, ein Wolfrom-Planetensatz oder ein Strinradgetriebe etc. betrachtet werden.

Beispielhaft weist ein einstufiges Planetengetriebe ein Zentralrad 1, Steg s und ein Zentralrad 2 auf, wobei das Planetengetriebe am Zentralrad 1 gehäuseseitig fixiert ist. Im Normalbetrieb wird das Getriebe am Steg s angetrieben und am Zentralrad 2 abgetrieben wird. In Gegenrichtung soll das Getriebe eine Selbst- oder Teilhemmung aufweisen. D.h. der Antrieb ist dann Zentralrad 2 und der Abtrieb der Steg s. Nur für eine Betriebsart kann ein Planetengetriebe eine Selbsthemmung aufweisen und auch nur bei positiver Standübersetzung. Diese wird beispielhaft mit den Planetengetrieben nach Fig. 4 und Fig. 5 erreicht. Eine positive Standübersetzung bedeutet dabei, dass bei stehendem Steg beide Zentralräder in die gleiche Richtung drehen.

Die Standübersetzung bei einem stehenden Steg s ergibt sich nach:

$$i_{12} = \frac{z_{p1}}{z_1} \cdot \frac{z_2}{z_{p2}}$$

Lastabhängige Verluste durch die Zahnreibung können durch einen Wirkungsgrad berücksichtigt werden. Bei einem bekannten Zahnwirkungsgrad der einzelnen Stufen berechnet sich der Standwirkungsgrad zu:

$$\eta_{12} = \eta_{z_1 z_{p1}} \cdot \eta_{z_{p2} z_2}$$

Zusätzlich zu den lastabhängigen Verlusten (z.B. durch Zahnreibung) gibt es auch lastunabhängige Verluste, die sich durch ein konstant wirkendes Moment zeigen. Dies können z.B. Reibungen von Dichtungen oder Lagern sein. Die konstante Reibung zeigt sich bei einem Getriebe unter anderem durch das Leerlaufdrehmoment.

Dem Steg s ist daher eine Welle 0 vorgeschaltet, wobei unabhängig von der Last ein konstantes Reibungsmoment $M_R$ immer entgegen der Drehrichtung der Welle $n_s = n_0$ wirkt.

Bei bekannter Standübersetzung $i_{12}$ und Standwirkungsgrad $\eta_{12} = \eta_{21}$ berechnen sich für das Planetengetriebe gemäß dem Betriebszustand mit stehendem Zentralrad 1 die Betriebsübersetzung und der Betriebswirkungsgrad zu:

$$i_{s2} = \frac{i_{12}}{i_{12} - 1}$$

$$i_{2s} = \frac{1}{i_{s2}} = 1 - \frac{1}{i_{12}}$$

Für die Berechnung des Wirkungsgrades ist es von Relevanz, ob die Standübersetzung $i_{12} > 1$ oder $i_{12} < 1$ ist.

Fall $i_{12} < 1$:

$$\eta_{s2} = \frac{i_{12} - 1}{i_{12} - \dfrac{1}{\eta_{12}}}$$

$$\eta_{2s} = \frac{i_{12} - \eta_{12}}{i_{12} - 1}$$

**Fall $i_{12} > 1$:**

$$\eta_{s2} = \frac{i_{12} - \eta_{12}}{i_{12} - 1}$$

$$\eta_{2s} = \frac{i_{12} - \dfrac{1}{\eta_{12}}}{i_{12} - 1}$$

Wird $\eta_{2s} \leq 0$ so ist das Getriebe selbsthemmend in der Richtung vom Zentralrad 2 zum Steg s. Das heißt, dass das Moment am Zentralrad 2 (jetzt Antriebswelle) zu inneren Reibungskräften führt, die ein Drehen des Stegs s (jetzt Abtriebswelle) verhindern. Diese Kräfte steigen mit steigendem Antriebsmoment und führen dazu, dass unabhängig von der Höhe des Antriebsmomentes keine Rückdrehung erfolgen kann. Das Moment $M_2$ kann so lange erhöht werden, bis es zu einer Zerstörung des Getriebes oder der Anbauteile kommt. Soll der Antrieb gedreht werden, also Leistung vom Zentralrad 2 zum Steg s fließen, muss zusätzliche Leistung am Steg s (Abtriebswelle) eingebracht werden. Dies erklärt den negativen Wirkungsgrad, mit dem die notwendige Leistung berechnet werden kann.

Für das Antreiben der Welle 0 zum Aufbau eines Momentes zum Greifen eines Werkstückes gelten folgende Zusammenhänge:

Bei gegeben Antriebsmoment $M_0$ und bekannter konstanter Reibung $|M_R|$ ergibt sich folgendes Moment am Zentralrad 2 (Abtriebswelle):

$$M_2 = -(M_0 \mp M_R) \cdot i_{s2} \cdot \eta_{s2}$$

Das Vorzeichen von $M_R$ ergibt sich aus der Drehrichtung und wirkt der Drehrichtung der Welle 0 entgegen. Wenn das Moment $M_0 > 0$ ist, ist auch die Drehrichtung der Welle 0 positiv. Da Leistung $P = 2 \cdot \pi \cdot n \cdot M$ in das Getriebe eingebracht wird, muss das Reibmoment $M_R$ abgezogen werden:

$$n_0 > 0 \ \rightarrow \ M_2 = -(M_0 - M_R) \cdot i_{s2} \cdot \eta_{s2}$$

Für das Antreiben am Zentralrad 2 zum Entspannen der Verspannung gelten folgende Zusammenhänge:

Die in der Systemnachgiebigkeit "gespeicherte" Greifkraft oder das Moment am Zentralrad 2 führt zu einem Antrieb des Getriebes am Zentralrad 2 durch die Greifkraft. Dies entspricht dem Betriebszustand, an dem am Zentralrad 2 (jetzt Antriebswelle) ein Moment wirkt. Dies führt zu einem Reaktionsmoment an der Welle 0:

$$M_0 = -M_2 \cdot i_{2s} \cdot \eta_{2s} \mp M_R$$

Je nach Drehrichtung der Welle 0 ergibt sich das Rechenzeichen von $M_R$. Ist die Drehrichtung negativ, da die Backen geöffnet werden, so ist das Rechenzeichen negativ:

$$n_0 < 0 \;\rightarrow\; M_0 = -M_2 \cdot i_{2s} \cdot \eta_{2s} - M_R$$

Aus der Leistungsberechnung von $P_0 = \omega_0 \cdot M_0 = 2 \cdot \pi \cdot n_0 \cdot M_0$ berechnet sich, ob Leistung wegfließt oder ob Leistung eingebracht werden muss. Wenn sich bei einer negativer Drehrichtung ein negatives Moment $M_0$ aus der Berechnung ergibt, muss Leistung eingebracht werden. Dann ist der Antriebsstrang nicht in der Lage, die aufgebaute Verspannung abzubauen und benötigt zusätzlich Leistung aus dem Motor. So ist die Aufgabe "Greifkrafterhaltung" im spannungsfreien Zustand erfüllt.
Die Greifkrafterhaltung ist durch eine Selbsthemmung zu realisieren:
Ist der Wirkungsgrad $\eta_{2s} < 0$, so liegt eine Selbsthemmung im Getriebe vor. Unabhängig von dem Moment $M_2$ ist es nicht möglich von der Abtriebsseite das Getriebe zu drehen.
Soll das Getriebe gedreht (oder der Verspannungszustand gelöst) werden, so muss an der Welle 0 (jetzt Abtriebswelle) ein Moment von

$$n_0 < 0 \;\rightarrow\; M_0 = -M_2 \cdot i_{2s} \cdot \eta_{2s} - M_R$$

aufgebracht werden.
Die Greifkrafterhaltung ist auch dann zu realisieren, wenn die innere Reibung größer als das Moment $M_2$ ausgebildet ist:
Wenn das Getriebe über einen positiven Wirkungsgrad $\eta_{2s}$ verfügt, muss das Moment $M_s$ am Steg s größer sein als die konstante Reibung $M_R$. Dabei ist die Momentenwandlung durch das Getriebe zu beachten. Nur so ist der Abtrieb in der Lage das Getriebe zu bewegen:

$$M_R < M_S = -M_2 \cdot i_{2s} \cdot \eta_{2s}$$

$$\text{Oder: } M_2 > -\frac{M_R}{i_{s2} \cdot \eta_{2s}}$$

Solange das Moment am Zentralrad 2 kleiner als diese Grenze ist, verhält sich das System wie gefordert und es kann die Verspannung selbst erhalten.
Nachfolgend sind Zahlenbeispiele für ein Getriebe aufgeführt:

$$z_1 = -50 \quad z_{p1} = 16 \quad z_{p2} = 16 \quad z_2 = -47$$

Daraus ergibt sich die Standübersetzung zu:

$$i_{12} = \frac{-50}{16} \cdot \frac{16}{-47} = 0{,}94$$

Damit ergeben sich folgende Betriebsübersetzungen:

$$i_{s2} = \frac{i_{12}}{i_{12} - 1} = \frac{0{,}94}{0{,}94 - 1} = -15{,}7$$

$$i_{2s} = \frac{1}{i_{s2}} = 1 - \frac{1}{i_{12}} = 1 - \frac{1}{0{,}94} = -0{,}064$$

Es wird von einem konstanten Reibmoment $|M_R| = 1$ *Ncm* ausgegangen.
Bei eine Standwirkungsgrad von $\eta_{12} = 0{,}9$ ist das Getriebe selbsthemmend.
Es ergeben sich folgende Betriebswirkungsgrade:

$$\eta_{s2} = \frac{i_{12} - 1}{i_{12} - \dfrac{1}{\eta_{12}}} = \frac{0,94 - 1}{0,94 - \dfrac{1}{0,9}} = 0,35$$

$$\eta_{2s} = \frac{i_{12} - \eta_{12}}{i_{12} - 1} = \frac{0,94 - 0,9}{0,94 - 1} = -0,67$$

Am negativen Wirkungsgrad $\eta_{2s}$ ist erkennbar, dass es sich um ein selbsthemmendes Getriebe handelt.

Aus einem Antriebsmoment an der Welle 0 (Antriebswelle) von $M_0 = 10$ Ncm ergibt sich somit ein Moment am Zentralrad 2 (Abtriebswelle) von

$$M_2 = -(M_0 - M_R) \cdot i_{s2} \cdot \eta_{s2} = -(10\ Ncm - 1\ Ncm) \cdot (-15,7) \cdot 0,35 = 49,4\ Ncm$$

Zum Lösen der so eingebrachten Verspannung am Zentralrad 2 ist an der Welle 0 ein Moment von

$$M_0 = -M_2 \cdot i_{2s} \cdot \eta_{2s} - M_R = -49,9\ Ncm \cdot (-0,064) \cdot (-0,67) - 1\ Ncm = -3,1\ Ncm$$

erforderlich. Ein negatives Moment in Verbindung mit der negativen Drehzahl bedeutet, dass zusätzlich Leistung an der Welle 0 oder Steg s eingebracht werden muss.

Bei einem Standwirkungsgrad von $\eta_{12} = 0,95$ ist das Getriebe nicht selbsthemmend.

Es ergeben sich folgende Betriebswirkungsgrade:

$$\eta_{s2} = \frac{i_{12} - 1}{i_{12} - \dfrac{1}{\eta_{12}}} = \frac{0,94 - 1}{0,94 - \dfrac{1}{0,95}} = 0,53$$

$$\eta_{2s} = \frac{i_{12} - \eta_{12}}{i_{12} - 1} = \frac{0,94 - 0,95}{0,94 - 1} = 0,17$$

Wegen des besseren Wirkungsgrads ist ein geringeres Antriebsmoment vom $M_0 = 7$ Ncm notwendig.

Es ergibt sich somit ein Moment am Zentralrad 2 von

$$M_2 = -(M_0 - M_R) \cdot i_{s2} \cdot \eta_{s2} = -(7\ Ncm - 1\ Ncm) \cdot (-15,7) \cdot 0,53 = 50,1\ Ncm$$

Das so verspannte Moment erzeugt an der Stegwelle s ein Moment von

$$M_s = -M_2 \cdot i_{2s} \cdot \eta_{2s} = -50,1\ Ncm \cdot (-0,064) \cdot 0,17 = 0,5\ Ncm > 1\ Ncm = M_R$$

D.h. die Verspannung kann nicht selbstständig gelöst werden. Zum Lösen der so eingebrachten Verspannung ist an der Welle 0 ein Moment von

$$M_0 = -M_2 \cdot i_{2s} \cdot \eta_{2s} - M_R = -50,1\ Ncm \cdot (-0,064) \cdot 0,17 - 1\ Ncm = -0,5\ Ncm$$

erforderlich.

Ab einem Moment von

$$M_2 = -\frac{M_R}{i_{s2} \cdot \eta_{2s}} = -\frac{1\ Ncm}{-0,064 \cdot 0,17} = 92\ Ncm$$

am Zentralrad 2 (jetzt Antriebswelle) dreht das Getriebe durch.

Der hier dargestellte analytische Ansatz zur Unterscheidung von Selbsthemmung und Teilhemmung gilt sowohl für ein einstufiges Planetengetriebe als auch für mehrstufige Planetenkoppelgetriebe und reduzierte Planetenkoppelgetriebe. Im Fall von gekoppelten Planetengetrieben muss auf Grundlage des Räderplanes die Gesamtübersetzung $i_{12}$ und der Gesamtwirkungsgrad in Betriebsrichtung $\eta_{12}$ und entgegen der Betriebsrichtung $\eta_{21}$ ermittelt werden.

Eine vorteilhafte Weiterbildung sieht vor, dass das Planetengetriebe als ein einstufiges Planetengetriebe, als ein mehrstufiges Planetenkoppelgetriebe, als ein reduziertes Planetenkoppelgetriebe oder als eine Kombination der zuvor genannten Getriebe ausgebildet ist. Auch die Kombination mit weiteren Getriebestufen wie z.B. einem Stirnrad- oder einem Kegelradgetriebe ist möglich.

Vorzugsweise ist das Planetengetriebe eingängig bzw. nicht-schaltbar ausgebildet. Vorzugsweise ist die Getriebeeinheit als ein Ein-Gang-Planetengetriebe ausgebildet. Bei einem eingängigen bzw. nichtschaltbaren Getriebe ist das Übersetzungsverhältnis des Getriebes konstant, insbesondere unabhängig vom Eingangsdrehmoment und/oder dem Ausgangsdrehmoment.

Es ist vorteilhaft, wenn eine erste Stufe des Planetengetriebes durch ein erstes Teilgetriebe mit einem ersten Eingangsglied und einem ersten Ausgangsglied gebildet ist, und wenn eine zweite Stufe des Planetengetriebes durch ein zweites Teilgetriebe mit einem zweiten Eingangsglied und einem zweiten Ausgangsglied gebildet ist. Die Eingangswelle ist vorzugsweise mit dem ersten Eingangsglied des ersten Teilgetriebes drehgekoppelt und/oder die Ausgangswelle mit dem zweiten Ausgangsglied des zweiten Teilgetriebes drehgekoppelt. Das erste Ausgangsglied ist vorzugsweise mit dem zweiten Eingangsglied drehgekoppelt. Ein derartiges Zusammenwirken der Teilgetriebe ohne zwischengelagerte Elemente ergibt eine bauraumsparende und leichte Getriebeeinheit. Vorzugsweise liegen die Eingangswelle und die Ausgangswelle auf einer Achse.

Gemäß einer Ausführungsform umfasst das Planetengetriebe ein erstes Hohlrad, einen Steg mit einem oder mehreren Planetenzahnrädern und einem zweiten Hohlrad. Die Planetenzahnräder sind dabei als Stufenplaneten ausgeführt und haben eine erste Seite, die mit dem ersten Hohlrad und eine zweite Seite, die mit dem zweiten Hohlrad im Eingriff stehen. Der Steg wird dabei mit dem Antrieb des Greifsystems gekoppelt. Das erste Hohlrad wird drehsteif mit dem Grundkörper gekoppelt. Das zweite Hohlrad stellt den Abtrieb des Planetengetriebes da und wir mit den Backen gekoppelt.

Eine weitere vorteilhafte Ausführungsform umfasst ein erstes Hohlrad, einen Steg mit einem oder mehreren Planetenzahnrädern und einem zweiten Hohlrad. Die Planetenräder weisen dabei auf der ersten Seite, die mit dem ersten Hohlrad im Eingriff steht, und auf der zweiten Seite, die mit dem zweiten Hohlrad im Eingriff steht, die gleiche Verzahnung auf. Da das erste Hohlrad und das zweite Hohlrad unterschiedliche Zähnezahlen aufweisen, kann durch Profilverschiebung der Zahnräder der gleiche Achsabstand zwischen den Hohlrädern und Planetenzahlräder erreicht werden. Diese Ausführungsform ermöglicht eine kostengünstigere Fertigung der Planetenräder. Als vorteilhaft erweist sich dabei, wenn die Hohlräder eine Zähnezahl im Bereich von 35 bis 55 Zähnen, insbesondere im Bereich von 43 bis 46 Zähnen, und die Planeten eine Zähnezahl im Bereich von 10 bis 20 Zähnen, insbesondere im Bereich von 12 bis 15 Zähnen, aufweisen.

Es ist bei dieser Ausführungsform alternativ vorteilhaft nur einen Planeten zu verändern. Mit zunehmender Größe des einen Planeten reicht dieser über die Drehachse der Zentralräder hinaus. Man spricht in diesem Fall von einem Exzenter- oder einem Akbargetriebe. Dabei kann der Planet als Stufenplanet oder mit durchgängiger Verzahnung ausgeführt werden.

Gemäß einer bevorzugten Ausführungsform kann das Getriebe auch als reduziertes Planetenkoppelgetriebe ausgeführt werden. Dabei wird als Eingangsglied ein erstes Sonnenrad verwendet, welches mit einem oder mehreren Planetenzahnrädern im Eingriff stehen. Für die Planetenzahnräder kann ein Planetenträger eingesetzt werden. Da über diesen keine Leistung übertragen wird, ist dieser nicht erforderlich und kann aus Kostengründen auch entfallen. Die Planetenzahnräder stehen mit zwei Hohlrädern im Eingriff. Ein erstes Hohlrad ist mit dem Grundkörper fixiert und das zweite Hohlrad stellt den Abtrieb dar. Es ist dabei vorteilhaft wenn die Planetenzahnräder eine durchgängige gleiche Verzahnung aufweisen, und die Zähnezahldifferenz der Hohlräder durch unterschiedliche Profilverschiebungen realisiert werden. Denkbar ist aber auch, dass die Planetenzahnräder zwei voneinander unterschiedliche Verzahnungen aufweisen, von denen die eine mit dem ersten Hohlrad und die zweite mit dem zweiten Hohlrad im Eingriff stehen. Eine solche Anordnung wird auch Wolfrom-Getriebe genannt. Als vorteilhaft erweist sich, wenn die Hohlräder eine Zähnezahl im Bereich von 35 bis 55 Zähnen, insbesondere im Bereich von 43 bis 46 Zähnen aufweisen und/oder die Planeten eine Zähnezahl im Bereich von 10 bis 20 Zähnen, insbesondere im Bereich von 12 bis 15 Zähne aufweisen, und/oder die Sonne Zähnezahlen im Bereich von 12 bis 25 Zähnen, insbesondere im Bereich von 14 bis 20 Zähnen aufweist. Diese bevorzugte Ausführungsform hat den Vorteil, eine höhere Gesamtübersetzung mit weniger Bauteilen und geringerem Bauraum bereitzustellen. Dadurch steigt die Leistungsdichte, was zu einem kleineren Endprodukt führt. Dabei werden die Anforderungen der Selbsthemmung erfüllt, was insbesondere bei kleinbauenden Getrieben stets eine Herausforderung darstellt.

Die Getriebeeinheit ist vorzugsweise im Grundgehäuse und/oder in einem Ansatzgehäuse angeordnet.

Gemäß einer weiteren Ausführungsform könnte das erste Teilgetriebe einen ersten Planetenträger, mindestens ein auf dem ersten Planetenträger angeordnetes erstes Planetenzahnrad, und ein erstes Hohlrad und ein zweites Hohlrad umfassen. Es ist denkbar, dass das erste Eingangsglied durch den ersten Planetenträger gebildet wird. Es ist weiter denkbar, dass das erste Ausgangsglied durch das zweite Hohlrad gebildet wird. Vorzugsweise weist das erste Planetenzahnrad zwei voneinander verschiedene Verzahnungen auf. Das zweite Teilgetriebe könnte ein zweites Sonnenrad, einen zweiten Planetenträger, mindestens ein auf dem zweiten Planetenträger angeordnetes zweites Planetenzahnrad, und ein drittes Hohlrad umfassen. Das zweite Eingangsglied könnte durch das zweite Sonnenrad gebildet werden. Das zweite Ausgangsglied könnte durch das dritte Hohlrad gebildet werden. Es ist ferner vorteilhaft, wenn das Grundgehäuse das erste Hohlrad und den zweiten Planetenträger bildet und/oder festsetzt. In dem Fall ist das erste Hohlrad und der zweite Planetenträger relativ zum Grundgehäuse fixiert.

Eine vorteilhafte Weiterbildung sieht vor, dass die Greif- oder Spannvorrichtung zur Greifkrafterhaltung am wenigstens einen Backenelement ein Greifkrafterhaltungsmittel aufweist. Demnach kann mittels des hemmenden Planetengetriebes eine Positionserhaltung und mittels des Greifkrafterhaltungsmittels eine Greifkrafterhaltung erzielt werden. Das Zusammenspiel des hemmenden Planetengetriebes und des Greifkrafterhaltungsmittels stellt eine optimale Rückfallposition beim Ausfall eines Antriebs dar. Es ist vorteilhaft, wenn zusätzlich zum Greifkrafterhaltungsmittel auch ein Positionserhaltungsmittel, insbesondere in Form einer Bremse und/oder eines Klemm-/Hemmmechanismus vorgesehen ist.

Das Greifkrafterhaltungsmittel ist vorzugsweise als Federmittel, insbesondere als Bogenfederkupplung ausgebildet. Die Bogenfederkupplung koppelt vorzugsweise die Eingangswelle und die Ausgangswelle, wobei insbesondere die Leistungsübertragung von der Eingangswelle über die Bogenfederkupplung zur Ausgangswelle erfolgt. Die Bogenfederkupplung erstreckt sich vorzugsweise entlang einer Getriebeachse und/oder ist vorzugsweise entlang der Getriebeachse zwischen der Eingangswelle und der Ausgangswelle des hemmenden Planetengetriebes angeordnet. Dazu können die Eingangswelle und/oder die Ausgangswelle und/oder die Bogenfederkupplung koaxial zur Getriebeachse angeordnet sein. Die Bogenfederkupplung ist vorzugsweise im Grundgehäuse oder im Ansatzgehäuse drehbar gelagert. Es ist alternativ denkbar, dass die Eingangswelle und die Ausgangswelle senkrecht zur Getriebeachse versetzt zueinander angeordnet sind. In dem Fall kann die Bogenfederkupplung koaxial zur Eingangswelle oder zur Ausgangswelle angeordnet sein oder ebenfalls senkrecht zur Getriebeachse versetzt zur Eingangswelle und zur Ausgangswelle angeordnet sein. In allen Anordnungen erfolgt vorzugsweise die Leistungsübertragung zwischen der Eingangswelle und der Ausgangswelle über die wenigstens eine Bogenfederkupplung.

Damit gehen die Vorteile einher, dass aufgrund der Mittel der Bogenfederkupplung in den Antriebsstrang eingebrachten Nachgiebigkeit eine möglichst verlustfreie Greifkrafterhaltung realisiert werden kann, und dass die die Spann- oder Greifvorrichtung schädigende Impulskräfte bzw. Impulskraftspitzen mittels der Bogenfederkupplung reduziert werden. Unter einer möglichst verlustfreien Greifkrafterhaltung ist zu verstehen, dass wenigstens 70%, insbesondere wenigstens 80%, bevorzugt wenigstens 90%, vorzugsweise wenigstens 95%, der durch den Antrieb eingebrachten Greifkraft erhalten bleiben und der Abfall der Greifkraft nur sehr gering ist.

Als Alternative zur Bogenfederkupplung kann ebenfalls eine Klauenkupplung mit dämpfenden, elastischen Zahnkränzen, eine Kupplung mit Druck- oder Zugfedern, eine Kupplung mit Spiralfedern oder eine Kupplung mit Schenkelfeder als Greifkrafterhaltungsmittel und/oder als Kupplung zum Einsatz kommen.

Gegenüber einer Klauenkupplung mit elastischen Kunststoff-Elementen weist die Bogenfederkupplung ein lineares Verhalten, eine größere Nachgiebigkeit, eine höhere Dauerfestigkeit bei gleicher Nachgiebigkeit, einen geringeren Verschleiß und eine geringere Beeinträchtigung von Temperatur und Feuchte auf das Verhalten und die Alterung auf. Gegenüber einer Kupplung mit geraden Druck- oder Zugfedern ist durch die Bogenfedern ein größerer Drehwinkel bei gleich Bauraum möglich. Gegenüber einer Kupplung mit Spiralfedern lassen sich höhere Federraten bei gleichem Bauraum erreichen. Gegenüber einer Kupplung mit Schenkelfedern ist ein geringerer axialer Bauraum erforderlich. Folglich ist eine höhere Leistungsdichte möglich.

Eine vorteilhafte Ausbildung der Erfindung sieht vor, dass die Bogenfederkupplung eine im Grundgehäuse oder im Ansatzgehäuse (beide nachfolgend als Gehäuse bezeichnet) drehbar gelagerte Unterschale, eine zur Unterschale separat ausgebildete Oberschale und wenigstens eine Bogenfeder aufweist. Die Bogenfeder kann alternativ durch eine gerade Schraubendruckfeder ersetzt werden, welche durch den Einbau in die Unterschale und/oder in die Oberschale bogenförmig verformt wird. Die Unterschale und die Oberschale sind vorzugsweise im montierten Zustand relativ zueinander verdrehbar. Die Unterschale ist im Gehäuse und/oder in der Oberschale drehbar gelagert. Die Oberschale ist im Gehäuse und/oder in der Unterschale drehbar gelagert. Bei einer relativen Drehbewegung zwischen der Unterschale und der Oberschale kommt es zu einer Stauchung der wenigstens einen Bogenfeder. Ein derartiger Aufbau stellt eine einfach und schnell herzustellende und montierbare Bogenfederkupplung dar. Die Bogenfeder nimmt dabei schädigende Impulskräfte auf und ermöglicht ferner durch die hohe Nachgiebigkeit eine, hinsichtlich Setzverhalten beim Greifen und Umkehrspiel im Antriebstrang, möglichst verlustfreie Greifkrafterhaltung. So kann beim Greifen eines eingespannten Werkstückes, welches sich nach dem Lösen der ursprünglichen Einspannung zwischen den Greifbacken neu ausrichtet, die Greifkraft möglichst verlustfrei erhalten werden und ein Werkstückverlust verhindert werden. Die aus dem Stand der Technik bekannte Lösung des dauerhaft bestromten Antriebs bzw. des "Nachbestromens" ist dadurch überflüssig. Im Zusammenspiel mit z.B. einem selbsthemmenden Getriebe kann der Greiferantrieb beim Transport des Werkstückes ausgeschaltet werden.

Es ist vorteilhaft, wenn die Unterschale einen insbesondere kreisringförmigen Lagerinnenring und einen insbesondere kreisringförmigen Lageraußenring aufweist. Der Lagerinnenring ist vorzugsweise im montierten Zustand gegenüber der Getriebeachse und/oder dem Lageraußenring radial innenliegend angeordnet und/oder der Lageraußenring ist vorzugsweise im montierten Zustand gegenüber der Getriebeachse und/oder dem Lagerinnenring radial außenliegend angeordnet. Ferner weist die Unterschale vorzugsweise einen Schalenboden auf, an welchem der Lagerinnenring und der Lageraußenring angeordnet sind. Der Lagerinnenring und der Lageraußenring stehen vorzugsweise im montierten Zustand parallel zur Getriebeachse gegenüber dem Schalenboden hervor.

Der Lagerinnenring und der Lageraußenring, und insbesondere der Schalenboden, begrenzen vorzugsweise eine insbesondere teilkreisringförmige oder insbesondere kreisringförmige Federaufnahme zur Aufnahme der wenigstens einen Bogenfeder. Die Bogenfeder ist vorzugsweise in der Federaufnahme und/oder radial zur Getriebeachse zwischen dem Lagerinnenring und dem Lageraußenring angeordnet. Die Federaufnahme bietet eine sichere Lagerung der Bogenfeder in der Bogenfederkupplung, insbesondere in der Unterschale, damit die Bogenfeder beim Stauchen oder Rückverformen nicht gegen eine Störkontur stoßen oder gegen das sich relativ zur Bogenfeder zum Teil schnell drehende Getriebegehäuse reiben kann.

Die Bogenfeder erstreckt sich vorzugsweise entlang einer Federachse, wobei die Federachse sich entlang des Umfangs eines Kreises oder Teilkreises erstreckt.

Es ist ferner vorteilhaft, wenn die Unterschale wenigstens einen Antriebssteg aufweist, welcher mit der wenigstens einen Bogenfeder derart zusammenwirkt, dass mittels des wenigstens einen Antriebsstegs die Bogenfeder um die Getriebeachse verdrehbar ist. Die Rotation der Unterschale bewirkt vorzugsweise dabei eine Rotation der Bogenfeder.

Vorzugsweise weist die Oberschale wenigstens einen Kupplungssteg auf. Ferner weist die Oberschale vorzugsweise einen Schalendeckel auf. Der Kupplungssteg ist vorzugsweise am Schalendeckel angeordnet und/oder steht im montierten Zustand parallel zur Getriebeachse gegenüber dem Schalendeckel hervor. Der wenigstens eine Kupplungssteg wirkt mit der Bogenfeder derart zusammen, dass mittels der Unterschale und/oder der wenigstens einen Bogenfeder die Oberschale antreibbar ist. Die Rotation der Unterschale bewirkt folglich vorzugsweise eine Rotation der Bogenfeder und ferner eine Rotation der Oberschale, wenn an der Oberschale kein entgegenstehendes Moment angreift. Wenn die Unterschale rotiert wird und die Oberschale festgestellt ist, z.B. durch einen gegriffenen Gegenstand zwischen den Backen, wird die wenigstens eine Bogenfeder mittels des Antriebsstegs und des Kupplungsstegs gestaucht.

Eine weitere vorteilhafte Weiterbildung der Erfindung sieht vor, dass am Lagerinnenring wenigstens eine inneren Antriebssteg und am Lageraußenring ein äußerer Antriebssteg angeordnet sind. Der innere Antriebssteg und/oder der äußere Antriebssteg erstreckt sich vorzugsweise in die Federaufnahme hinein. Der innere Antriebssteg und/oder der äußere Antriebssteg sind vorzugsweise einander zugewandt und/oder im montierten Zustand und im federunbelasteten Zustand der Bogenfeder gegenüber der Getriebeachse an derselben Winkelposition angeordnet. Vorzugsweise ist im montierten und federunbelasteten Zustand der wenigstens eine Kupplungssteg in einem Zwischenraum zwischen dem inneren Antriebssteg und dem äußeren Antriebssteg. Dies gilt vorzugsweise auch, wenn die Bogenfeder durch Vorspannung belastet ist. Der Kupplungssteg schneidet vorzugsweise die Federachse der wenigstens einen Bogenfeder. Das Vorsehen eines inneren Antriebsstegs und eines äußeren Antriebsstegs bringt eine sichere Lagerung der Bogenfeder in der Federaufnahme mit sich. Ferner greift der Kupplungssteg zentral an der Bogenfeder an. Demnach ist ein homogener Kraftfluss bei der Kraftübertragung zwischen der Unterschale und der Bogenfeder sowie zwischen der Bogenfeder und der Oberschale sichergestellt.

Es ist alternativ denkbar, dass die Oberschale den Lagerinnenring, den Lageraußenring und die Antriebsstege sowie die Unterschale die Kupplungsstege aufweist, wobei die wenigstens eine Bogenfeder in einer Federaufnahme der Oberschale angeordnet ist.

Eine weitere vorteilhafte Ausbildung der Erfindung sieht vor, dass die Bogenfederkupplung zwei Bogenfedern aufweist. Dabei sieht die Unterschale vorzugsweise zwei Paare von jeweils einem inneren Antriebssteg und einem äußeren Antriebssteg vor. Ferner weist die Oberschale vorzugsweise zwei Kupplungsstege auf. Zwischen den beiden Bogenfedern sind folglich jeweils ein Paar von Antriebsstegen und ein Kupplungssteg angeordnet. Das Paar von Antriebsstegen und/oder die Kupplungsstege schließen gegenüber der Getriebeachse einen Winkel zwischen 160° und 200°, insbesondere zwischen 170° und 190°, bevorzugt von 180° ein. Dies ist z.B. der Fall, wenn die zwei Bogenfedern dieselbe Federlänge aufweisen. Insbesondere bei kleineren zu realisierenden Verdrehwinkeln kann es sinnvoll sein, pro Feder jeweils einen Antriebssteg und einen Kupplungssteg vorzusehen, welche dann in kleineren Winkeln als 180° zueinander angeordnet sein können.

Es ist vorteilhaft, wenn die Unterschale hülsenförmig ausgebildet ist und/oder eine zentrale Öffnung aufweist. Ferner ist es vorteilhaft, wenn die Oberschale einen insbesondere gegenüber dem Schalendeckel und/oder dem Antriebssteg hervorstehenden Zapfen aufweist. Vorzugsweise greift der Zapfen im montierten Zustand in die zentrale Öffnung der Unterschale ein. Ferner ist es vorteilhaft, wenn der Zapfen hohl ausgebildet ist und demnach ein Antriebs- oder Getriebeelement aufnehmen kann. Folglich kann die Antriebseinheit axial flacher bauen. Der Hohlraum in der Oberschale und/oder in der Unterschale und/oder der Zapfen können zudem als Fettreservoir ausgebildet sein.

Es ist ferner vorteilhaft, wenn die Bogenfederkupplung, insbesondere die Unterschale und/oder die Oberschale, gleitend im Gehäuse drehbar gelagert ist. Damit geht eine einfache und wartungsarme Lagerung der Bogenfederkupplung einher.

Vorzugsweise ist die Oberschale und die Ausgangswelle drehsteif miteinander gekoppelt. Demnach bewirkt eine Rotation der Oberschale unmittelbar eine Rotation der Ausgangswelle. Daraufhin werden ferner die Backen verlagert, sodass ein Gegenstand mit der Spann- oder Greifvorrichtung gegriffen werden kann. Vorzugsweise ist die Bogenfederkupplung zwischen dem zweiten Ausgangsglied des zweiten Teilgetriebes und der Ausgangswelle angeordnet.

Es ist ferner vorteilhaft, wenn die Unterschale drehsteif mit dem zweiten Ausgangsglied des zweiten Teilgetriebes gekoppelt.

Als alternative Greifkrafterhaltungsmittel können auch magnetische, hydraulische oder pneumatische Bremsen und/oder Reibmittel und/oder Klemmmittel und/oder Elastomermittel zum Einsatz kommen.

Das Greifkrafterhaltungsmittel kann vorzugsweise ein translatorisches Elastizitätsmittel und ein separat dazu ausgebildetes rotatorisches Elastizitätsmittel aufweisen. Die Elastizitätsmittel können als Federmittel, insbesondere Spiralfeder, und/oder Elastomermittel ausgebildet sein. Dadurch können mittels einer einstellbaren Elastizität im Abtriebsstrang das zwangsläufig entstehende Getriebe- und Kupplungsspiel sowie systemimmanente Nachgiebigkeiten kompensiert und dadurch eine kontrollierte Greifkrafterhaltung erzeugt werden. Als rotatorisches Elastizitätsmittel kann ein Federmittel, insbesondere eine Bogenfeder, und/oder ein Elastomermittel vorgesehen sein. Als translatorisches Elastizitätsmittel kann ein Federmittel und/oder ein Elastomermittel vorgesehen. Das translatorische Elastizitätsmittel und das rotatorische Elastizitätsmittel sind vorzugsweise beabstandet zueinander angeordnet. Vorzugsweise ist das translatorische Elastizitätsmittel in einer Führungsbaugruppe des Synchronisierungsritzels und/oder der Zahnstange der Backen angeordnet.

Durch die Eigenschaften bzw. eine gezielte Auslegung der elastischen/federnden Elemente kann kinetische Energie im Abtriebsstrang in einem höheren Maße abgebaut werden. Dadurch kann der im Betrieb erzeugte Greifimpuls, der höher als die originäre Greifkraft ausfallen kann, auf einen zuvor festgelegten Bereich limitiert werden. Durch eine gezielte Auslegung der Elastizitäten im System wird kinetische Energie in Federenergie gewandelt. Bei einem Werkstückverlust entspannt sich die Elastizität (die mechanische Feder), wodurch die Grundbacke in axialer Richtung bewegt wird. Diese Bewegung wird vorzugsweise von einem Wegmesssystem erkannt und kann zur Werkstückverlusterkennung in der Steuerung des Greifers verwendet werden.

In einer ersten Ausführungsform ist das rotatorisches Elastizitätsmittel als Bogenfeder und das translatorische Elastizitätsmittel als mechanische Feder, insbesondere aus Kunststoff oder Metall, ausgebildet. Aufgrund der Kombination aus zwei einstellbaren, sich addierenden Elastizitäten ermöglicht eine Beeinflussung des Kraftverlaufes mittels zweierlei Möglichkeiten der Greifkrafterhaltung in einem großen Bereich. Demnach wird die Anpassbarkeit sowie das Verhalten des mechatronischen Greifers erheblich verbessert. Zudem können größere Federwege realisiert werden, was eine Greifimpulsreduktion und eine Werkstückverlusterkennung ermöglicht. Ferner kann mittels einer gezielten Einstellung der Eigenschaften der federnden Elemente der Kraftverlauf (Arbeitspunkt) in einem größeren Bereich verändert werden.

In einer zweiten Ausführungsform ist ein translatorisches Elastizitätsmittel in Form eines Elastomerelements, insbesondere aus Kunststoff oder Metall, und kein rotatorisches Elastizitätsmittel vorgesehen. Im Vergleich zur ersten Ausführungsform ist eine geringere Möglichkeit der Einstellbarkeit der Elastizität vorhanden, da lediglich ein greifkrafterhaltendes Elastizitätsmittel zum Einsatz kommt. Damit gehen die Vorteile einer kompakten Bauform, einer vereinfachten Auswechselbarkeit und Montage des Greifkrafterhaltungsmittels einher.

In einer dritten Ausführungsform ist ein translatorisches Elastizitätsmittel in Form einer mechanischen Feder, insbesondere aus Kunststoff oder Metall, und kein rotatorisches Elastizitätsmittel vorgesehen. Im Vergleich zur ersten Ausführungsform ist eine geringere Möglichkeit der Einstellbarkeit der Elastizität vorhanden, da lediglich ein greifkrafterhaltendes Elastizitätsmittel zum Einsatz kommt. Damit gehen der Vorteil einher, dass größere Federwege realisiert werden können, wodurch eine Greifimpulsreduktion und eine Werkstückverlusterkennung ermöglicht werden.

In einer vierten Ausführungsform ist ein translatorisches Elastizitätsmittel in Form eines Elastomerelements, insbesondere aus Kunststoff oder Metall, und ein rotatorisches Elastizitätsmittel in Form einer Bogenfeder vorgesehen. Dadurch kann der im Betrieb erzeugte Greifimpuls, der höher als die originäre Greifkraft ausfallen kann, auf einen zuvor festgelegten Bereich limitiert werden. Durch eine gezielte Auslegung der Elastizitäten im System wird kinetische Energie in Federenergie gewandelt. Bei einem Werkstückverlust entspannt sich die Elastizität (die mechanische Feder), wodurch die Grundbacke in axialer Richtung bewegt wird. Diese Bewegung wird vorzugsweise von einem Wegmesssystem erkannt und kann zur Werkstückverlusterkennung in der Steuerung des Greifers verwendet werden. Ferner kann das Greifkrafterhaltungsmittel einfacher montierbar und kostengünstiger im Vergleich zur ersten Ausführungsform bereitgestellt werden.

Es ist vorteilhaft, wenn die Greif- oder Spannvorrichtung einen Antrieb aufweist. Ein hemmendes Planetengetriebe in einer Greif- oder Spannvorrichtung ermöglicht eine kompakt bauende Vorrichtung und zugleich hohe Greif- oder Spannkräfte. Der Antrieb kann kleiner und leichter als üblich ausfallen, was wiederum Bauraum und Gewicht einspart.

Durch ein geringes Gewicht und einen Antrieb mit verringertem Energiebedarf können Industrie- und Montageanlagen effizienter gestaltet werden. Weiterhin entfallen durch ein automatisches Umschalten Steuerleitungen, äußere Mechanik und/oder Elektronik, dadurch sinkt die Komplexität.

Es ist ferner vorteilhaft, wenn die Greif- oder Spannvorrichtung ein zum Grundgehäuse separat ausgebildetes Ansatzgehäuse aufweist, in dem der Antrieb und/oder das hemmende Planetengetriebe angeordnet sind. Wenn das hemmende Planetengetriebe im Ansatzgehäuse angeordnet ist, gelten die Ausführungen zum Bilden oder Festsetzen der Getriebekomponente der ersten und zweiten Getriebestufe entsprechend auch für das Ansatzgehäuse. Alternativ ist der Antrieb im Ansatzgehäuse und das hemmende Planetengetriebe im Grundgehäuse angeordnet.

Die der Erfindung zugrundeliegende Aufgabe wird ebenfalls durch eine Getriebebaugruppe für eine Greif- oder Spannvorrichtung gelöst, wobei die Getriebebaugruppe eine beschriebene Getriebeeinheit, insbesondere mit einem oder mehreren vorgenannten Merkmalen, und eine Bogenfederkupplung, insbesondere mit einem oder mehreren vorgenannten Merkmalen, aufweist.

Weitere Einzelheiten und vorteilhafte Ausgestaltungen der Erfindung sind der nachfolgenden Beschreibung zu entnehmen, anhand derer Ausführungsbeispiele der Erfindung weiter beschrieben und erläutert sind.

Es zeigen:

Fig. 1        eine Schnittdarstellung einer Greif- oder Spannvorrichtung mit einem selbsthemmenden Planetengetriebe und einer Bogenfederkupplung;

Fig. 2        eine Schnittdarstellung des Planetengetriebes gemäß Fig. 1;

Fig. 3        eine perspektivische Unteransicht des Planetengetriebes gemäß Fig. 2;

Fig. 4 bis 8    Räderpläne für ein Planetengetriebe in unterschiedlichen Ausführungsformen;

Fig. 9        eine schematische Oberansicht der Bogenfederkupplung gemäß Fig. 1;

Fig. 10       eine schematische Unteransicht der Bogenfederkupplung gemäß Fig. 9;

Fig. 11       eine seitliche Schnittansicht der Bogenfederkupplung gemäß Fig. 9;

Fig. 12       eine Schnittansicht von oben der Bogenfederkupplung gemäß Fig. 9; und

Fig. 13 - 16   eine Schnittansicht einer Greif- oder Spannvorrichtung gemäß Fig. 1 mit Greifkrafterhaltungsmittel in vier Ausführungsformen.

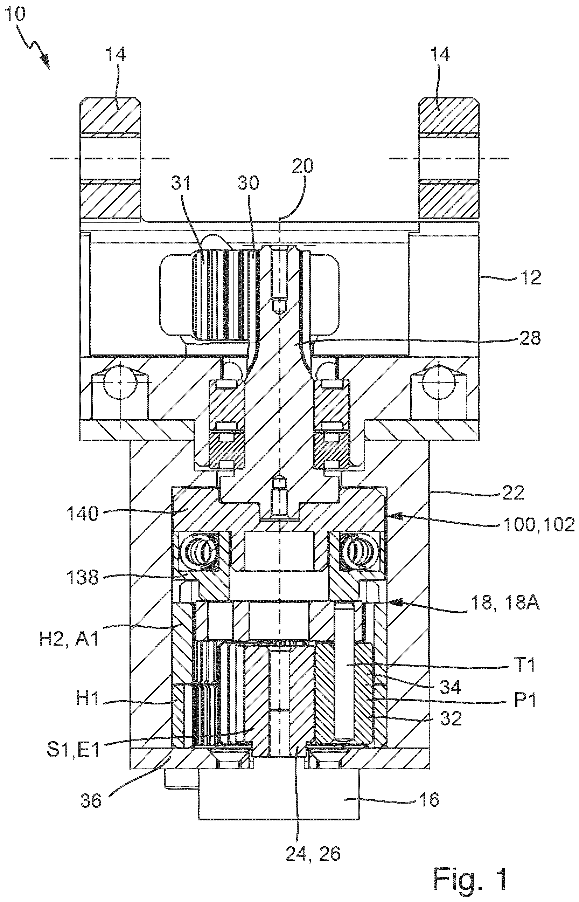

Die Fig. 1 zeigt eine Spann- und/oder Greifvorrichtung 10 zum Greifen eines nicht dargestellten Gegenstands mit zwei in einem Grundgehäuse 12 linear zwischen einer Schließstellung und einer Offenstellung beweglichen Backenelementen 14.

Zur Antreiben der Backenelemente 14 weist die Spann- und/oder Greifvorrichtung 10 einen Antrieb 16 auf, wobei der Antrieb 16 beispielsweise elektrisch, pneumatisch oder auch manuell erfolgen kann. Zwischen dem Antrieb 16 und der Backenelemente 14 ist eine als selbsthemmendes Planetengetriebe 18A ausgebildete Getriebeeinheit 18 angeordnet, welche sich entlang einer Getriebeachse 20 erstreckt. Die Getriebeeinheit 18 ist in einem Ansatzgehäuse 22 angeordnet, wobei das Ansatzgehäuse 22 vorzugsweise am Grundgehäuse 12 angeflanscht ist. Es ist alternativ denkbar, dass die Getriebeeinheit 18 in dem Grundgehäuse 12 angeordnet ist. Der Antrieb 16 ist in Fig. 1 am Ansatzgehäuse 22 angeordnet. Alternativ kann der Antrieb 16 ebenfalls im Ansatzgehäuse 22 oder im Grundgehäuse 12 angeordnet sein.

Die Getriebeeinheit 18 weist gemäß Fig. 1 eine entlang der Getriebeachse 20 erstreckende, im Ansatzgehäuse 22 drehbar gelagerte Eingangswelle 24 auf, welche mit einer Antriebswelle 26 des Antriebs 16 bewegungsgekoppelt ist. Alternativ bildet die Antriebswelle 26 des Antriebs 16 die Eingangswelle 24. Die Getriebeeinheit 18 weist ferner eine entlang der Getriebeachse 20 erstreckende, im Grundgehäuse 12 und/oder im Ansatzgehäuse 22 drehbar gelagerte Ausgangswelle 28 auf, welche mit den Backenelementen 14 mittels eines Synchronisierungsritzel 30 bewegungsgekoppelt ist. Das Synchronisierungsritzel 30 wirkt mit an den Backenelementen 14 vorgesehenen Zahnstangenprofilen 31 zusammen. Sobald die Eingangswelle 24 in eine Drehbewegung versetzt wird, dreht sich die Ausgangswelle 28 synchron in gleicher Drehrichtung mit. Die Ausgangswelle 28 ist mit dem Synchronisierungsritzel 30 gekoppelt und versetzt so die Backenelemente 14 in Bewegung.

Die Eingangswelle 24 und die Ausgangswelle 28 drehen sich mit unterschiedlichen Drehzahlen. Je nach Zähnezahl drehen sich die Eingangswelle 24 und die Ausgangswelle 28 in die gleiche oder in die entgegengesetzte Drehrichtung in Bezug auf die Getriebeachse 20. Das Eingangsdrehmoment DE wird durch die Getriebeeinheit 18 vervielfacht, sodass die Backenelemente 14 mit einer erhöhten Kraft durch ein gegenüber dem Eingangsdrehmoment DE erhöhtes Ausgangsdrehmoment DA verfahrbar sind. Die Drehrichtung kann sowohl im Uhrzeigersinn als auch gegen den Uhrzeigersinn erfolgen.

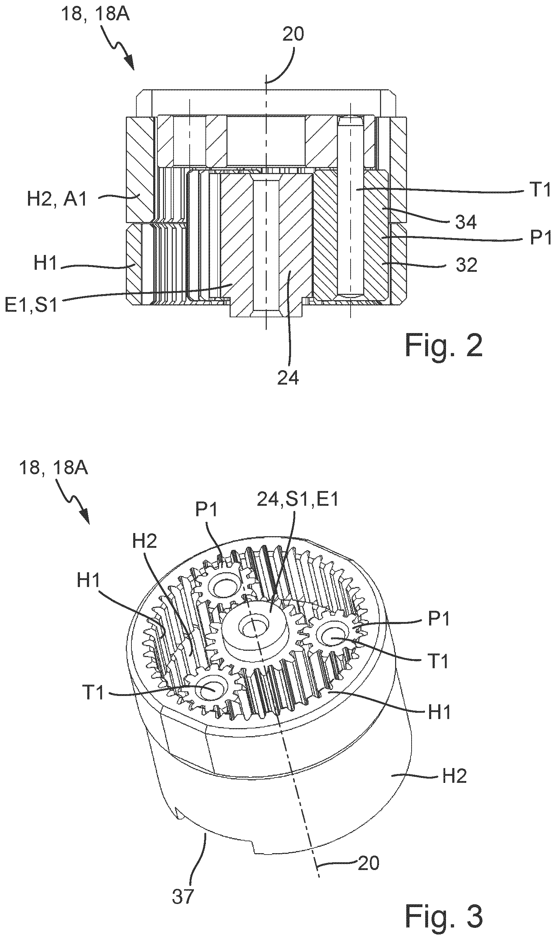

In den Fig. 1 bis 3 ist ersichtlich, dass die Getriebeeinheit 18 ein erstes Hohlrad H1, ein Sonnenrad S1, erste Planetenzahnräder P1, die auf einem ersten Planetenträger T1 angeordnet sind, sowie ein zweites Hohlrad H2 umfasst. Das erste Sonnenrad S1 ist mit der Eingangswelle 24 und bildet ein erstes Eingangsglied E1. Vorzugsweise sind drei Planetenzahnräder P1 vorgesehen; eine andere Anzahl ist jedoch auch denkbar. Die Planetenzahnräder P1 weisen jeweils einen ersten Planetenabschnitt 32 und einen zweiten Planetenabschnitt 34 auf, die in dieser Ausführungsform gleich ausgestaltet sind; unterschiedliche Zähnezahlen und/oder Durchmesser sind für die Planetenabschnitte 32, 34 allerdings denkbar. Der erste Planetenabschnitt 32 ist mit dem Hohlrad H1 im Eingriff und der zweite Planetenabschnitt 34 ist mit dem zweiten Hohlrad H2 im Eingriff. Das zweite Hohlrad H2 bildet das erste Ausgangsglied A1 und ist mit der Ausgangswelle 28 über eine Bogenfederkupplung 102 gekoppelt. Das erste Hohlrad H1 ist drehfest mit dem Grundgehäuse 12 und/oder dem Ansatzgehäuse 22 gekoppelt. Es ist auch denkbar, dass das Grundgehäuse 12 und/oder das Ansatzgehäuse 22 das erste Hohlrad H1 bildet. Das Ansatzgehäuse 22 wird durch einen Gehäusedeckel 36 verschlossen, wobei dieser mit dem Ansatzgehäuse 22 verschraubt ist. Auf dem Gehäusedeckel 36 ist vorzugsweise der erste Planetenträger T1 drehbar angeordnet, wobei dieser sich unabhängig des Gehäusedeckels 36 um die Getriebeachse 20 drehen kann. Dazu kann eine Lagerung zwischen dem Gehäusedeckel 36 und dem ersten Planetenträger T1 vorgesehen sein.

Wenigstens eine Komponente der Getriebeeinheit 18 ist festgesetzt, sodass eine Wandlung des Eingangsdrehmoments DE in ein höheres Ausgangsdrehmoment DA erfolgt. Dabei treten Relativbewegungen zwischen den einzelnen Komponenten der Getriebeeinheit 18 auf. In der Ausführungsform gemäß der Figuren 1 bis 3 ist das erste Hohlrad H1 drehfest gegenüber dem Ansatzgehäuse 22 festgesetzt.

Wenn das erste Hohlrad H1 mit dem Ansatzgehäuse 22 drehfest verbunden sind, bewegen sich die Komponenten der Getriebeeinheit 18 wie folgt:

Das erste Sonnenrad S1 wird durch die Eingangswelle 24 angetrieben, dadurch werden die Planetenzahnräder P1 angetrieben und laufen am festgesetzten ersten Hohlrad H1 mit dem ersten Planetenabschnitt 32 ab. Die Planetenzahnräder P1 drehen sich dabei um ihre jeweilige Achse und führen eine umlaufende Bewegung um die Getriebeachse 20 aus. Dadurch wird das zweite Hohlrad H2 mit dem zweiten Abschnitt 34 angetrieben. Das zweite Hohlrad H2 dreht sich dadurch sehr langsam entgegen der Drehrichtung der Eingangswelle 24 mit einem hohen Drehmoment. Das zweite Hohlrad H2 treibt vorzugsweise die Ausgangswelle 28 oder ein nachfolgendes Antriebselement an.

In Fig. 4 ist ein Getriebeschaltplan einer weiteren Ausführungsform des Planetengetriebes 18A gezeigt. Es handelt sich dabei um ein einstufiges Planetengetriebe 18A mit einer positiven Standübersetzung und Hohlrädern als Zentralrädern. Das Planetengetriebe 18A umfasst ein erstes Hohlrad H1, einen ersten Planetenträger T1 mit einem oder mehreren Planetenzahnrädern P1 und einem zweiten Hohlrad H2. Die Planetenzahnräder P1 sind dabei als Stufenplaneten ausgeführt und weisen einen ersten Planetenabschnitt 32, der mit dem ersten Hohlrad H1 und einen zweiten Planetenabschnitt 34, der mit dem zweiten Hohlrad H2 im Eingriff steht, auf. Der Planetenträger T1 ist dabei mit der Eingangswelle 24 gekoppelt. Das erste Hohlrad 24 wird drehsteif mit dem Grundgehäuse 12 und/oder dem Ansatzgehäuse 22 gekoppelt. Das zweite Hohlrad H2 stellt den Abtrieb des Planetengetriebes 18A dar und ist mit der Ausgangswelle 28 gekoppelt.

In Fig. 5 ist ein Getriebeschaltplan einer weiteren Ausführungsform des Planetengetriebes 18A gezeigt. Hierbei handelt es sich um einstufiges Planentengetriebe 18A mit einer positiven Standübersetzung und außenverzahnten Stirnrädern als Zentralräder. Das Planetengetriebe 18A umfasst ein erstes Sonnenrad S1, einen ersten Planetenträger T1 mit einem oder mehreren Planetenzahnrädern P1 und einem zweiten Sonnenrad S2. Die Planetenzahnräder P1 sind dabei als Stufenplaneten ausgeführt und weisen einen ersten Planetenabschnitt 32, der mit dem ersten Sonnenrad S1 und einen zweiten Planetenabschnitt 34, der mit dem zweiten Sonnenrad S2 im Eingriff steht, auf. Das Sonnenrad ist dabei mit der Eingangswelle 24 gekoppelt. Das zweite Sonnenrad S2 stellt den Abtrieb des Planetengetriebes 18A dar und ist mit der Ausgangswelle 28 gekoppelt.

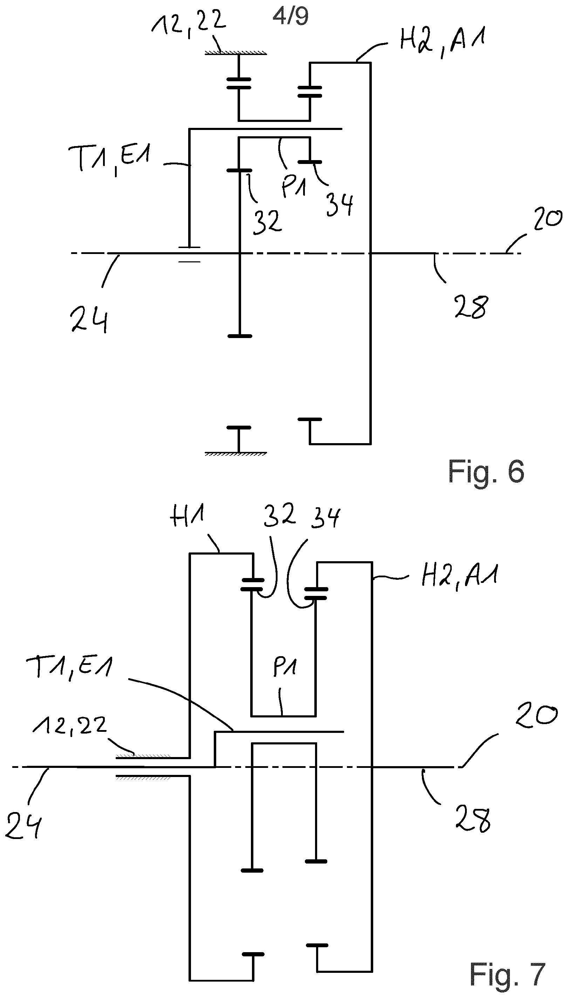

In Fig. 6 ist ein Getriebeschaltplan der Ausführungsform des Planetengetriebes 18A gemäß Fig. 1 gezeigt. Hierbei handelt es sich um einstufiges Planetengetriebe 18A mit einer positiven Standübersetzung und zwei Hohlrädern als Zentralräder bzw. ein reduziertes Planetenkoppelgetriebe (Wolfrom-Getriebesatz). Das Planentengetriebe 18A umfasst ein Sonnenrad S1, welches mit einem Planetenträger T1 gekoppelt ist. Auf dem Planetenträger T1 sind ein oder mehrere Planetenzahnräder P1. Ferner ist ein zweites Hohlrad H2 vorgesehen. Die Planetenzahnräder P1 weisen einen ersten Planetenabschnitt 32, der mit dem ersten Hohlrad H1 und einen zweiten Planetenabschnitt 34, der mit dem zweiten Hohlrad H2 im Eingriff steht, auf, wobei die Planetenabschnitte 32, 34 durchgängig die gleiche Verzahnung aufweisen. Da das erste Hohlrad H1 und das zweite Hohlrad H2 unterschiedliche Zähnezahlen aufweisen, kann durch eine Profilverschiebung der Zahnräder der gleiche Achsabstand zwischen den Hohlrädern H1, H2 und den Planetenzahnrädern P1 erreicht werden. Denkbar ist es auch, dass die Planetenzahnräder P1 zwei voneinander unterschiedliche Verzahnungen aufweisen, von denen die eine mit dem ersten Hohlrad H1 und die zweite mit dem zweiten Hohlrad H2 im Eingriff stehen. Eine solche Anordnung wird auch Wolfrom-Getriebe genannt. Als vorteilhaft erweist sich, wenn die Hohlräder H1, H2 eine Zähnezahl im Bereich von 35 bis 55 Zähnen, insbesondere im Bereich von 43 bis 46 Zähnen aufweisen und/oder die Planetenzahnräder P1 eine Zähnezahl im Bereich von 10 bis 20 Zähnen, insbesondere im Bereich von 12 bis 15 Zähne aufweisen, und/oder das Sonnenrad S1 Zähnezahlen im Bereich von 12 bis 25 Zähnen, insbesondere im Bereich von 14 bis 20 Zähnen aufweist. Diese bevorzugte Ausführungsform hat den Vorteil, eine höhere Gesamtübersetzung mit weniger Bauteilen und geringerem Bauraum bereitzustellen. Dadurch steigt die Leistungsdichte, was zu einem kleineren Endprodukt führt. Dabei werden die Anforderungen der Selbsthemmung erfüllt, was insbesondere bei kleinbauenden Getrieben stets eine Herausforderung darstellt.

Eine weitere Ausführungsform eines Planetengetriebes 18A umfasst ein erstes Hohlrad H1, einen Planetenträger T1 mit einem oder mehreren Planetenzahnrädern P1 und einem zweiten Hohlrad H2. Die Planetenzahnräder P1 weisen einen ersten Planetenabschnitt 32, der mit dem ersten Hohlrad H1 und einen zweiten Planetenabschnitt 34, der mit dem zweiten Hohlrad H2 im Eingriff steht, auf, wobei die Planetenabschnitte 32, 34 die gleiche Verzahnung aufweisen. Da das erste Hohlrad H1 und das zweite Hohlrad H2 unterschiedliche Zähnezahlen aufweisen, kann durch eine Profilverschiebung der Zahnräder der gleiche Achsabstand zwischen den Hohlrädern H1, H2 und den Planetenzahnrädern P1 erreicht werden. Diese Ausführungsform ermöglicht eine kostengünstigere Fertigung der Planetenzahnräder P1. Als vorteilhaft erweist sich dabei, wenn die Hohlräder H1, H2 eine Zähnezahl im Bereich von 35 bis 55 Zähnen, insbesondere im Bereich von 43 bis 46 Zähnen, und die Planetenzahnräder P1 eine Zähnezahl im Bereich von 10 bis 20 Zähnen, insbesondere im Bereich von 12 bis 15 Zähnen, aufweisen.

In Fig. 7 ist eine weitere vorteilhafte Abwandlung der Ausführungsform gezeigt, wobei vorzugsweise nur ein Planetenzahnrad P1 verwendet wird. Mit zunehmender Größe des einen Planetenzahnrads P1 reicht dieser über die Drehachse 20 der Zentralräder hinaus. Man spricht in diesem Fall von einem Exzenter- oder einem Akbargetriebe. Dabei kann das Planetenzahnrad P1 als Stufenplanet oder mit durchgängiger Verzahnung ausgeführt werden. Damit wird gegenüber der Ausführungsform gemäß Fig. 6 eine größere Übersetzung erzielt.

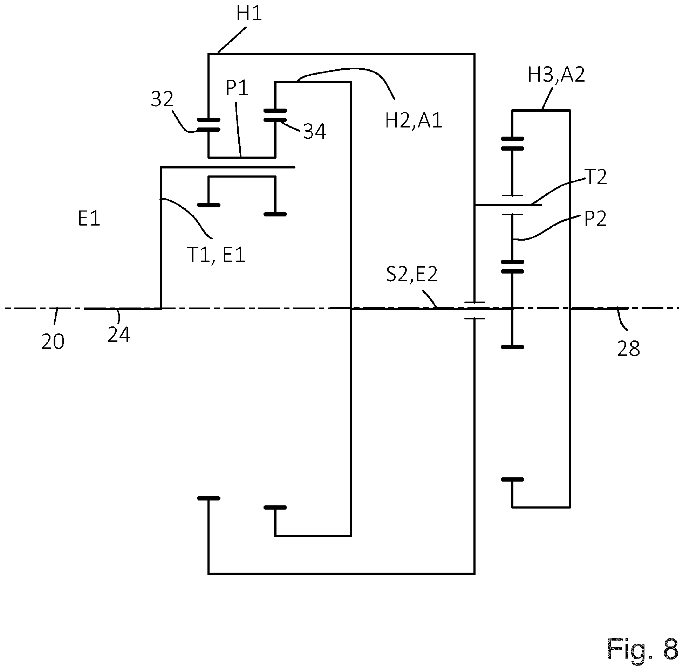

In Fig. 8 ist eine weitere vorteilhafte Ausführungsform der Getriebeeinheit 18 mit einem ersten Teilgetriebe G1 und einem zweiten Teilgetriebe G2 als Räderplan dargestellt. Das erste Teilgetriebe G1 umfasst einen ersten Planetenträger T1, wenigstens ein erstes Planetenzahnrad P1, ein erstes Hohlrad H1 und ein zweites Hohlrad H2. Das erste Teilgetriebe G1 umfasst kein erstes Sonnenrad. Das zweite Teilgetriebe G2 umfasst einen zweiten Planetenträger T2, wenigstens ein zweites Planetenzahnrad P2, ein zweites Sonnenrad S2 und ein drittes Hohlrad H3. Der erste Planetenträger T1 bildet ein erstes Eingangsglied E1 und ist mit der Eingangswelle 24 gekoppelt. Das zweite Hohlrad H2 bildet ein erstes Ausgangsglied A1 und ist mit dem zweiten Sonnenrad S2 gekoppelt. Das Sonnenrad S2 bildet ein zweites Eingangsglied E2 des zweiten Teilgetriebes G2. Das dritte Hohlrad H3 bildet das zweite Ausgangsglied A2 und ist mit der Ausgangswelle 28 koppelbar. Das erste Planetenzahnrad P1 weist einen ersten Planetenabschnitt 32 und einen zweiten Planetenabschnitt 34 auf, wobei der erste Planetenabschnitt 32 mit dem ersten Hohlrad H1 zusammenwirkt und der zweite Planetenabschnitt 34 mit dem zweiten Hohlrad H2 zusammenwirkt. Die Planetenabschnitte 32, 34 sind unterschiedlich dargestellt, können jedoch gleich ausgestaltet sein, was über eine geeignete Wahl der Zähnezahlen und Profilverschiebungen der korrespondierenden Komponenten H1, H2 und P1 ermöglicht wird. Das erste Hohlrad H1 und der zweite Planetenträger T2 sind vorzugsweise gegenüber dem Grundgehäuse 12 und/oder dem Ansatzgehäuse 22 festgesetzt. Damit wird gegenüber der Ausführungsform gemäß Fig. 6 eine größere Übersetzung erzielt.

Alle Ausführungsformen der Getriebeeinheit 18 haben gemein, dass die Eingangswelle 24 und die Ausgangswelle 28 entlang der Getriebeachse 20 verlaufen, dabei können diese hohl ausgeführt sein, um etwa Sensorkabel oder weitere Versorgungsleitungen hindurchzuführen.

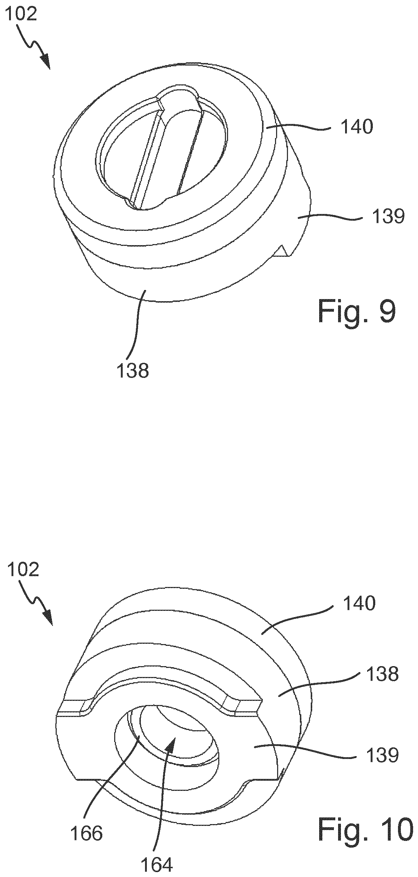

Die Greif- oder Spannvorrichtung 10 weist gemäß Fig. 1 ferner ein Greifkrafterhaltungsmittel 100 auf. Das Greifkrafterhaltungsmittel 100 ist als Bogenfederkupplung 102 gemäß den Fig. 9 bis 12 ausgebildet. Mittels der Greifkrafterhaltungsmittel 100 kann eine Greifkrafterhaltung an den Backenelementen 14 realisiert werden. Die Kombination des selbsthemmenden Planetengetriebes 18A in Verbindung mit der Bogenfederkupplung 102 geht mit den Vorteilen einher, dass aufgrund der mittels der Bogenfederkupplung 102 in den Antriebsstrang eingebrachten Nachgiebigkeit und der Nichtrückdrehbarkeit des selbsthemmenden Planetengetriebes 18A eine möglichst verlustfreie Greifkrafterhaltung realisiert werden kann, und dass die Spann- oder Greifvorrichtung 10 schädigende Impulskräfte bzw. Impulskraftspitzen mittels der Bogenfederkupplung 102 reduziert werden.

Die Bogenfederkupplung 102 ist vorzugsweise zwischen dem zweiten Ausgangsglied A2 und der Ausgangswelle 24 angeordnet, wobei das zweite Ausgangsglied A2 mit der Bogenfederkupplung 102 drehgekoppelt ist.

Die Bogenfederkupplung 102 weist gemäß Fig. 9 bis 12 eine Unterschale 138 und eine Oberschale 140 auf, wobei die Unterschale 138 und die Oberschale 140 mittels zweier Bogenfedern 142 miteinander gekoppelt sind. Die Unterschale 138 ist mit dem zweiten Ausgangsglied A2 drehgekoppelt. Die Oberschale 140 ist mit der Ausgangswelle 28 drehgekoppelt.

Wenn das zweite Hohlrad H2 das zweite Ausgangsglied bildet, ist das zweite Hohlrad H2 mit der Bogenfederkupplung 102 drehgekoppelt. Dazu weist die Unterschale 138 zwei dem Planetengetriebe 18 zugewandte Mitnehmer 139 auf, welche im montierten Zustand in zwei der Bogenfederkupplung 30 zugewandte Ausnehmungen 37 des zweiten Hohlrads H2 eingreifen. Entsprechendes gilt auch für die anderen Getriebevarianten, wobei dann die Ausnehmungen am Sonnenrad, an den Planentenzahnrädern oder am Planetenträger angeordnet sind.

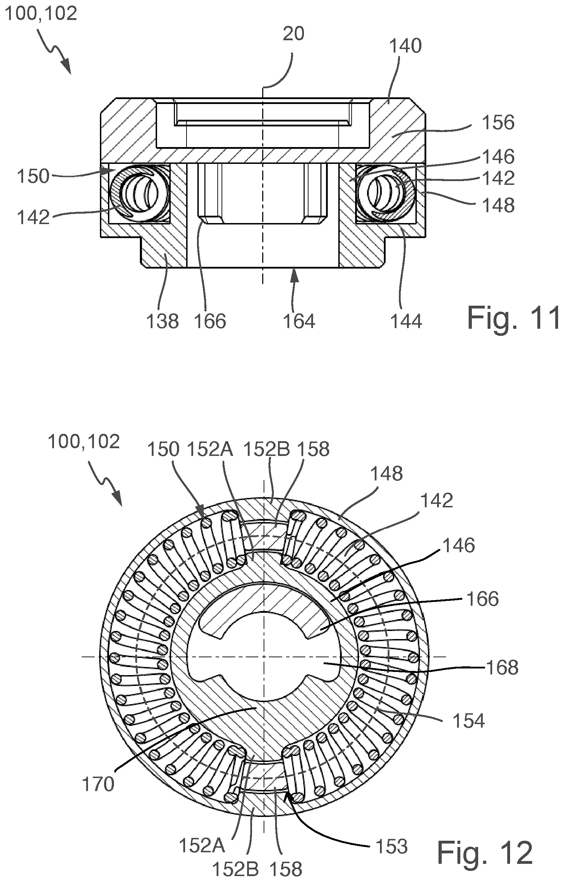

Die Unterschale 138 weist gemäß Fig. 11 und 12 einen Schalenboden 144, einen kreisförmigen Lagerinnenring 146 und einen kreisförmigen Lageraußenring 148 auf, welche gemeinsam eine teilkreisringförmige Federaufnahme 150 zur Aufnahme der Bogenfedern 142 begrenzen. Zudem sind gemäß Fig. 12 mit einem Winkel von 180° zueinander beabstandet jeweils ein innerer Antriebssteg 152A am Lagerinnenring 146 und ein äußerer Antriebssteg 152B an Lageraußenring 148 vorgesehen. Der Lagerinnenring 146, der Lageraußenring 148 und die Antriebsstege 152A, 152B stehen parallel zur Getriebeachse 20 gegenüber dem Schalenboden 144 hervor.

Die Bogenfedern 142 erstrecken sich gemäß Fig. 12 jeweils entlang einer Federachse 154, welche entlang eines Kreisumfangs bzw. eines Teilkreisumfangs um die Getriebeachse 20 verläuft. Die Bogenfedern 142 sind in der Federaufnahme 150 angeordnet, leicht vorgespannt und stützen sich jeweils an den inneren Antriebsstegen 152A und an den äußeren Antriebsstegen 152B ab. Die Bogenfedern 142 reduzieren die Kraftimpulse bzw. die Kraftspitzen und bewirken ferner durch die Nachgiebigkeit eine nahezu verlustfreie Krafterhaltung an den Backenelementen 14.

Die Oberschale 140 weist gemäß Fig. 11 und 12 einen Schalendeckel 156 und zwei Kupplungsstege 158 auf, wobei die Kupplungsstege1 58 mit einem Winkel von 180° beabstandet sind. Der Schalendeckel 156 schließt die Federaufnahme 150 ab. Die Kupplungsstege 158 sind in Bezug auf die Getriebeachse 20 jeweils radial zwischen dem inneren Antriebssteg 152A und dem äußeren Antriebssteg 152B angeordnet. Die Kupplungsstege 158 sind im montierten und federunbelasteten Zustand in einem Zwischenraum 153 zwischen dem inneren Antriebssteg 152A und dem äußeren Antriebssteg 152B angeordnet. Die Kupplungsstege 158 sind so ausgebildet, dass diese die Federachse 154 schneiden.

Die Antriebsstege 152A, 152B wirken derart mit den Bogenfedern 142 zusammen, dass mittels der Unterschale 138 die Bogenfeder 142 rotativ antreibbar ist. Die Kupplungsstege 158 wirken derart mit den Bogenfedern 142 zusammen, dass mittels der Bogenfedern 142 die Oberschale 140 rotativ antreibbar ist.

Die Bogenfederkupplung 102 ist derart ausgebildet, dass, wenn kein Lastmoment an der Ausgangswelle 28 bzw. der Oberschale 140 wirkt, bei einer Rotation der Unterschale 138 um die Getriebeachse 20 keine oder nur eine unwesentliche relative Rotationsbewegung zwischen der Unterschale 138 und den Bogenfedern 142 und/oder zwischen der Unterschale 138 und der Oberschale 140 stattfindet.

Die Bogenfederkupplung 102 ist ferner derart ausgebildet, dass, wenn ein Lastmoment an der Ausgangswelle 28 bzw. der Oberschale 140 wirkt, bei einer Rotation der Unterschale 138 um die Getriebeachse 20 eine relative Rotationsbewegung zwischen der Unterschale 138 und den Bogenfedern 142 und/oder zwischen der Unterschale 138 und der Oberschale 140 stattfindet. In dem Fall bewegen sich die Kupplungsstege 158 aus dem Zwischenraum zwischen den Antriebsstegen 152A, 152B entlang der Federachse 154 heraus. Dabei werden die Bogenfeder 142 gestaucht.

Zur Kraftübertragung zwischen der Ausgangswelle 28 und den Backenelementen 14 ist gemäß Fig. 1 an jedem Backenelement 14 eine Backenverzahnung 160 vorgesehen, welche mit dem Synchronisierungsritzel 30 zusammenwirkt. Die Ausgangswelle 28 und das Synchronisierungsritzel 30 können einteilig ausgebildet sein oder mehrteilig und drehsteig ausgebildet sein. Die Ausgangswelle 28 ist vorzugsweise senkrecht zur Getriebeachse 20 zwischen den beiden Backenelementen 14 angeordnet.

Ferner ist gemäß Fig. 10 bis 12 die Unterschale 138 hülsenförmig ausgebildet und weist eine zentrale Öffnung 164 auf, welche einen an der Oberschale 140 angeordneten, entlang der Getriebeachse 20 erstreckenden Zapfen 166 im montierten Zustand aufnimmt. Der Zapfen 166 ist vorzugsweise hohl ausgebildet, sodass ein Getriebeelement der Getriebeeinheit 18, z.B. die Eingangswelle 22 oder das Ausgangsglied A2, in den Zapfen 166 hineinragen kann.

Der Zapfen 166 erstreckt sich vorzugsweise entlang 360° um die Getriebeachse 20. Alternativ erstreckt sich der Zapfen 166 gemäß Fig. 12 um weniger als 320°, insbesondere weniger als 280°, vorzugsweise weniger als 240° und bevorzugt weniger als 220°. Demnach bildet der Zapfen 166 eine Lücke 168, in welche sich ein an der Unterschale 138 angeordneter Drehanschlag 170 hineinerstreckt. Der Drehanschlag 170 ist vorzugsweise einstückig mit der Unterschale 138 ausgebildet. Es ist vorteilhaft, wenn der Drehanschlag 170 in Verbindung mit dem Zapfen 166 weiterhin eine hülsenförmige Ausnehmung vorsehen. Ein derartiges Zusammenspiel zwischen einem teilringkreisförmigen Zapfen 166 und einem Drehanschlag 170 verhindert, dass der zulässige Federweg der Bogenfeder 142 überschritten wird oder die Bogenfeder 142 auf Block fährt. Der Abstand im unbelasteten Zustand zwischen dem Drehanschlag 170 und dem Ende des Zapfens 166 ist vorzugsweise in einem Bereich zwischen 30° und 70°, bevorzugt zwischen 40° und 60°, vorzugsweise bei 50°. Eine besonders bevorzugte Ausbildung der Erfindung sieht vor, dass sich der Zapfen 166 um einen Winkel im Bereich zwischen 150° und 110°, insbesondere im Bereich zwischen 140° und 120°, vorzugsweise von 130°, erstreckt. Vorzugsweise erstreckt sich der Drehanschlag 170 um einen Winkel im Bereich zwischen 150° und 110°, insbesondere im Bereich zwischen 140° und 120°, vorzugsweise von 130°. Es ist vorteilhaft, wenn der Drehanschlag 170 sich um denselben Winkel erstreckt, wie der Zapfen 166. Demnach gleichen sich die Massen des Zapfens 166 und des Drehanschlags 170 aus, sodass keine Unwucht vorliegt. Wenn der Zapfen 166 und der Drehanschlag 170 sich jeweils um einen Winkel von 130° um die Getriebeachse 20 erstrecken, sind die Unterschale 138 und die Oberschale 140 jeweils in beide Drehrichtungen um 50° verdrehbar.

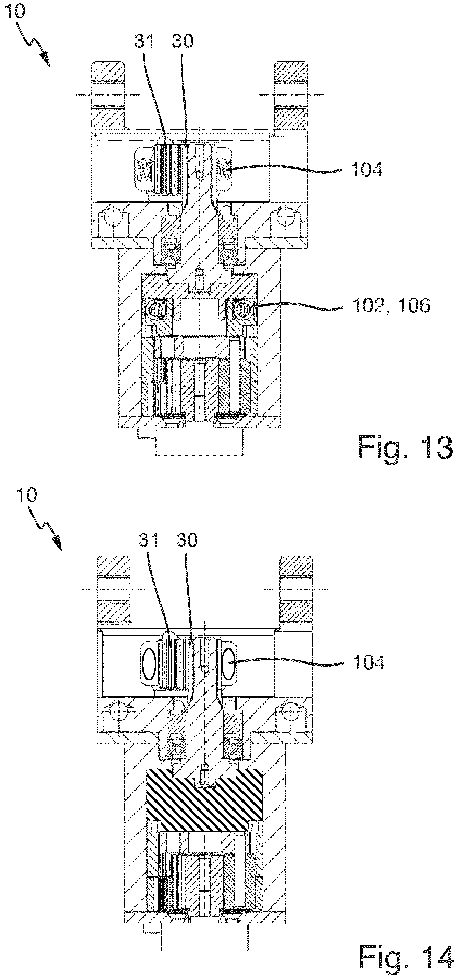

In den Fig. 13 bis 16 ist die Greifvorrichtung 10 mit unterschiedlichen Ausführungsformen des Greifkrafterhaltungsmittel 100 gezeigt. Das Greifkrafterhaltungsmittel 100 kann vorzugsweise ein translatorisches Elastizitätsmittel 104 und/oder ein separat dazu ausgebildetes rotatorisches Elastizitätsmittel 106 auf. Die Elastizitätsmittel 104, 106 können als Federmittel und/oder Elastomermittel ausgebildet sein. Dadurch können mittels einer einstellbaren Elastizität im Abtriebsstrang das zwangsläufig entstehende Getriebe- und Kupplungsspiel sowie systemimmanente Nachgiebigkeiten kompensiert und dadurch eine kontrollierte Greifkrafterhaltung erzeugt werden. Als rotatorisches Elastizitätsmittel 106 kann ein Federmittel, insbesondere eine Bogenfeder 102, und/oder ein Elastomermittel vorgesehen sein. Als translatorisches Elastizitätsmittel 104 kann ein Federmittel und/oder ein Elastomermittel vorgesehen. Das translatorische Elastizitätsmittel 104 und das rotatorische Elastizitätsmittel 106 sind vorzugsweise beabstandet zueinander angeordnet. Vorzugsweise ist das translatorische Elastizitätsmittel 104 in einer Führungsbaugruppe des Synchronisierungsritzels 30 und/oder dem Zahnstangenprofil 31 der Backenelemente 14 angeordnet.

Durch die Eigenschaften bzw. eine gezielte Auslegung der elastischen/federnden Elemente kann kinetische Energie im Abtriebsstrang in einem höheren Maße abgebaut werden. Dadurch kann der im Betrieb erzeugte Greifimpuls, der höher als die originäre Greifkraft ausfallen kann, auf einen zuvor festgelegten Bereich limitiert werden. Durch eine gezielte Auslegung der Elastizitäten im System wird kinetische Energie in Federenergie gewandelt. Bei einem Werkstückverlust entspannt sich die Elastizität (die mechanische Feder), wodurch die Backenelemente 14 in axialer Richtung bewegt wird. Diese Bewegung wird vorzugsweise von einem Wegmesssystem erkannt und kann zur Werkstückverlusterkennung in der Steuerung des Greifers verwendet werden.

In einer ersten Ausführungsform gemäß Fig. 13 ist das rotatorisches Elastizitätsmittel 106 als Bogenfeder 102 und das translatorische Elastizitätsmittel 104 als mechanische Feder, insbesondere aus Kunststoff oder Metall, ausgebildet. Aufgrund der Kombination aus zwei einstellbaren, sich addierenden Elastizitäten ermöglicht eine Beeinflussung des Kraftverlaufes mittels zweierlei Möglichkeiten der Greifkrafterhaltung in einem großen Bereich. Demnach wird die Anpassbarkeit sowie das Verhalten des mechatronischen Greifers erheblich verbessert. Zudem können größere Federwege realisiert werden, was eine Greifimpulsreduktion und eine Werkstückverlusterkennung ermöglicht. Ferner kann mittels einer gezielten Einstellung der Eigenschaften der federnden Elemente der Kraftverlauf (Arbeitspunkt) in einem größeren Bereich verändert werden.

In einer zweiten Ausführungsform gemäß Fig. 14 ist ein translatorisches Elastizitätsmittel 104 in Form eines Elastomerelements, insbesondere aus Kunststoff oder Metall, und kein rotatorisches Elastizitätsmittel vorgesehen. Im Vergleich zur ersten Ausführungsform ist eine geringere Möglichkeit der Einstellbarkeit der Elastizität vorhanden, da lediglich ein greifkrafterhaltendes Elastizitätsmittel zum Einsatz kommt. Damit gehen die Vorteile einer kompakten Bauform, einer vereinfachten Auswechselbarkeit und Montage des Greifkrafterhaltungsmittels einher.

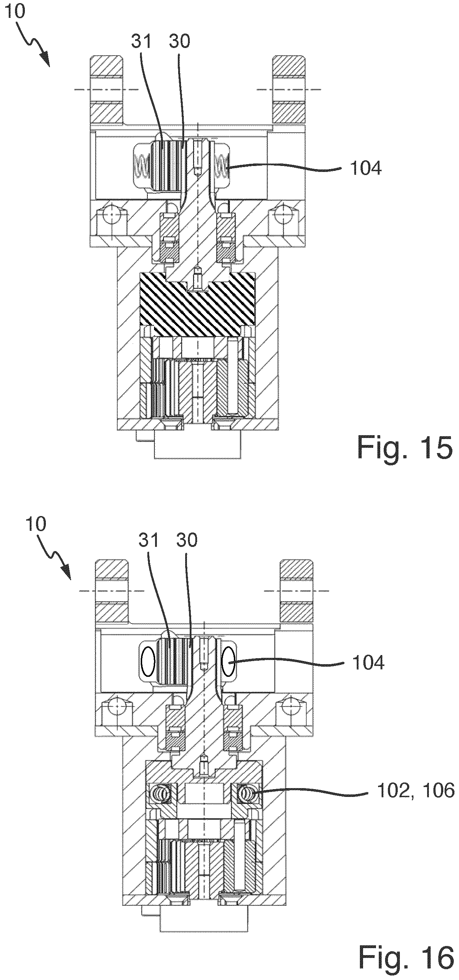

In einer dritten Ausführungsform gemäß Fig. 15 ist ein translatorisches Elastizitätsmittel 104 in Form einer mechanischen Feder, insbesondere aus Kunststoff oder Metall, und kein rotatorisches Elastizitätsmittel vorgesehen. Im Vergleich zur ersten Ausführungsform ist eine geringere Möglichkeit der Einstellbarkeit der Elastizität vorhanden, da lediglich ein greifkrafterhaltendes Elastizitätsmittel zum Einsatz kommt. Damit gehen der Vorteil einher, dass größere Federwege realisiert werden können, wodurch eine Greifimpulsreduktion und eine Werkstückverlusterkennung ermöglicht werden.

In einer vierten Ausführungsform gemäß Fig. 16 ist ein translatorisches Elastizitätsmittel 104 in Form eines Elastomerelements, insbesondere aus Kunststoff oder Metall, und ein rotatorisches Elastizitätsmittel 106 in Form einer Bogenfeder 102 vorgesehen. Dadurch kann der im Betrieb erzeugte Greifimpuls, der höher als die originäre Greifkraft ausfallen kann, auf einen zuvor festgelegten Bereich limitiert werden. Durch eine gezielte Auslegung der Elastizitäten im System wird kinetische Energie in Federenergie gewandelt. Bei einem Werkstückverlust entspannt sich die Elastizität (die mechanische Feder), wodurch die Grundbacke in axialer Richtung bewegt wird. Diese Bewegung wird vorzugsweise von einem Wegmesssystem erkannt und kann zur Werkstückverlusterkennung in der Steuerung des Greifers verwendet werden. Ferner kann das Greifkrafterhaltungsmittel 100 einfacher montierbar und kostengünstiger im Vergleich zur ersten Ausführungsform bereitgestellt werden.

**Patentansprüche**

1.  Greif- oder Spannvorrichtung (10) mit einem Grundgehäuse (12), mit wenigstens einem im Grundgehäuse (12) verfahrbar angeordneten Backenelement (14) und mit einer Getriebeeinheit (18), wobei die Getriebeeinheit (18) eine Eingangswelle (24) und eine Ausgangswelle (28) aufweist, wobei die Eingangswelle (24) mit einem Antrieb (16) koppelbar oder gekoppelt ist und wobei die Ausgangswelle (28) mit dem wenigstens einen Backenelement (14) koppelbar oder gekoppelt ist, und
wobei die Getriebeeinheit (18) als ein hemmendes Planetengetriebe (18A) ausgebildet ist.

2.  Greif- oder Spannvorrichtung (10) nach Anspruch 1,
wobei das Planetengetriebe (18A) als ein einstufiges Planetengetriebe und/oder als ein mehrstufiges Planetenkoppelgetriebe und/oder als ein reduziertes Planetenkoppelgetriebe und/oder als Wolfrom-Getriebe ausgebildet ist.

3. Greif- oder Spannvorrichtung (10) nach Anspruch 1 oder 2, wobei das Planetengetriebe (18A) ein erstes Hohlrad (H1), ein dazu separat ausgebildetes zweites Hohlrad (H2) und wenigstens ein Planetenzahnrad (P1) aufweist, wobei das wenigstens eine Planetenzahnrad (P1) einen ersten Planetenabschnitt (32) und einen zweiten Planetenabschnitt (34) aufweist, und wobei der erste Planetenabschnitt (32) mit dem ersten Hohlrad (H1) zusammenwirkt und der zweite Planetenabschnitt (34) mit dem zweiten Hohlrad (H2) zusammenwirkt.

4. Greif- oder Spannvorrichtung (10) nach Anspruch 3, wobei das erste Hohlrad (H1) und das zweite Hohlrad (H2) unterschiedliche Zähnezahlen aufweisen, wobei der erste Planetenabschnitt (32) und der zweite Planetenabschnitt (34) die gleiche Verzahnung aufweisen, und wobei das erste Hohlrad (H1) und/oder das zweite Hohlrad (H2) und/oder der erste Planetenabschnitt (32) und/oder der zweite Planetenabschnitt (34) eine Profilverschiebung aufweist.

5. Greif- oder Spannvorrichtung (10) nach Anspruch 3, wobei das erste Hohlrad (H1) und das zweite Hohlrad (H2) unterschiedliche Zähnezahlen aufweisen, wobei das wenigstens eine Planetenzahnrad (P1) als Stufenplanet ausgebildet ist und der erste Planetenabschnitt (32) und der zweite Planetenabschnitt (34) eine unterschiedliche Verzahnung aufweisen.

6. Greif- oder Spannvorrichtung (10) nach einem der Ansprüche 3 bis 5, wobei das Planetengetriebe (18A) neben dem ersten Hohlrad (H1), dem zweiten Hohlrad (H2) und dem wenigstens einen Planetenzahnrad (P1) ferner einen Planetenträger (T1) aufweist, und wobei der Planetenträger (T1) ein Eingangsglied (E1) und das zweite Hohlrad (H2) ein Ausgangsglied (A1) bilden.

7. Greif- oder Spannvorrichtung (10) nach einem der Ansprüche 3 bis 5, wobei das Planetengetriebe (18A) neben dem ersten Hohlrad (H1), dem zweiten Hohlrad (H2) und dem wenigstens einen Planetenzahnrad (P1) ferner ein Sonnenrad (S1) und einen Planetenträger (T1) aufweist, und wobei das Sonnenrad (S1) ein Eingangsglied (E1) und das zweite Hohlrad (H2) ein Ausgangsglied (A1) bilden.

8. Greif- oder Spannvorrichtung (10) nach einem der Ansprüche 3 bis 7, wobei das Grundgehäuse (12) das erste Hohlrad (H1) bildet und/oder festsetzt.

9. Greif- oder Spannvorrichtung (10) nach Anspruch 2, wobei das Planetengetriebe (18A) ein erstes Sonnenrad (S1), ein dazu separat ausgebildetes zweites Sonnenrad (S2) und wenigstens ein Planetenzahnrad (P1) aufweist, wobei das wenigstens eine Planetenzahnrad (P1) einen ersten Planetenabschnitt (32) und einen zweiten Planetenabschnitt (34) aufweist, wobei der erste Planetenabschnitt (32) mit dem ersten Sonnenrad (S1) zusammenwirkt und der zweite Planetenabschnitt (34) mit dem zweiten Sonnenrad (S2) zusammenwirkt, wobei die Planetenabschnitte (32, 34) die gleiche Verzahnung und eine Profilverschiebung oder eine unterschiedliche Verzahnung aufweisen.

10. Greif- oder Spannvorrichtung (10) nach einem der vorherigen Ansprüche,

   wobei eine erste Stufe der Getriebeeinheit (18) durch ein erstes Teilgetriebe (G1) mit einem ersten Eingangsglied (E1) und einem ersten Ausgangsglied (A1) gebildet ist,
   wobei eine zweite Stufe des Planetengetriebes durch ein zweites Teilgetriebe (G2) mit einem zweiten Eingangsglied (E2) und einem zweiten Ausgangsglied (A2) gebildet ist,
   wobei die Eingangswelle (32) mit dem ersten Eingangsglied (E1) des ersten Teilgetriebes (G1) drehgekoppelt ist,
   wobei das erste Ausgangsglied (A1) des ersten Teilgetriebes (G1) mit dem zweiten Eingangsglied (E2) des zweiten Teilgetriebes (G2) drehgekoppelt ist, und
   wobei das zweiten Ausgangsglied (A2) des zweiten Teilgetriebes (G2) mit der Ausgangswelle (34) drehgekoppelt ist.

11. Greif- oder Spannvorrichtung (10) nach Anspruch 10, wobei das erste Teilgetriebe (G1) einen ersten Planetenträger (T1), wenigstens ein erstes Planetenzahnrad (P1), ein erstes Hohlrad (H1) und ein zweites Hohlrad (H2) aufweist, wobei das zweite Teilgetriebe (G2) einen zweiten Planetenträger (T2), wenigstens ein zweites Planetenzahnrad (P2), ein zweites Sonnenrad (S2) und ein drittes Hohlrad (H3) aufweist, wobei der erste Planetenträger (T1) das erste Eingangsglied (E1), das zweite Hohlrad (H2) das erste Ausgangsglied (A1), das zweite Sonnenrad (S2) das zweite Eingangsglied (E2) und das dritte Hohlrad (H3) das zweite Ausgangsglied (A2) bildet.

12. Greif- oder Spannvorrichtung (10) nach einem der vorherigen Ansprüche ferner umfassend ein Greifkrafterhaltungsmittel (100) zur Greifkrafterhaltung und/oder Positionserhaltung am wenigstens einen Backenelement (14).

**13.** Greif- oder Spannvorrichtung (10) nach Anspruch 12, wobei das Greifkrafterhaltungsmittel (100) als ein Federmittel, insbesondere eine Bogenfederkupplung (102), und/oder als eine magnetische, hydraulische oder pneumatische Bremse und/oder als ein Reibmittel und/oder als Klemmmittel und/oder als Elastomermittel ausgebildet ist.

**14.** Greif- oder Spannvorrichtung (10) nach Anspruch 13, wobei das Greifkrafterhaltungsmittel (100) ein translatorisches Elastizitätsmittel und ein separat dazu ausgebildetes rotatorisches Elastizitätsmittel aufweist.

**15.** Greif- oder Spannvorrichtung (10) nach einem der vorherigen Ansprüche ferner umfassend ein Positionserhaltungsmittel zur Positionserhaltung des wenigstens einen Backenelements (14).

Fig. 1

Fig. 2

Fig. 3

Fig. 4

Fig. 5

Fig. 6

Fig. 7

H1

32

P1

34

H2,A1

H3,A2

E1

T1, E1

T2

P2

S2,E2

20

24

28

Fig. 8

Fig. 9

Fig. 10

100,102

20

140

156

146

142

148

150

142

138  166        164       144

# Fig. 11

100,102   150 152A  152B 158

148

142

146

166

168

154

170

152A

153

152B  158

# Fig. 12

10

31 30

104

102, 106

Fig. 13

10

31 30

104

Fig. 14

Fig. 15

Fig. 16

Europäisches
Patentamt

European
Patent Office

Office européen
des brevets

## EUROPÄISCHER RECHERCHENBERICHT

**Nummer der Anmeldung**

EP 24 21 0282

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 079 862 B1 (ZIMMER GÜNTHER [DE]; ZIMMER MARTIN [DE]) 14. Februar 2018 (2018-02-14) | 1,2 | INV. B25J15/02 |
| Y | * Abbildungen 1,2,6 * | 3-15 | |
| | - - - - - | | |
| A | DE 10 2019 125415 B4 (SCHUNK GMBH & CO KG [DE]) 12. August 2021 (2021-08-12) * Abbildung 1 * | 1 | |
| | - - - - - | | |
| Y | EP 1 485 636 B1 (BOSCH GMBH ROBERT [DE]) 22. April 2009 (2009-04-22) * Abbildung 2 * | 3-11 | |
| | - - - - - | | |
| Y | DE 10 2023 108107 A1 (ILLINOIS TOOL WORKS [US]) 5. Oktober 2023 (2023-10-05) * Absatz [0024] * * Absatz [0069] * | 3-11 | |
| | - - - - - | | |
| Y | KR 2018 0018123 A (MANDO CORP [KR]) 21. Februar 2018 (2018-02-21) * Anspruch 1 * | 12-15 | |
| | - - - - - | | |

**RECHERCHIERTE SACHGEBIETE (IPC)**

B25J

Der vorliegende Recherchenbericht wurde für alle Patentansprüche erstellt

| Recherchenort | Abschlußdatum der Recherche | Prüfer |
|---|---|---|
| Den Haag | 20. März 2025 | Hartnack, Kai |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 21 0282

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-03-2025

| Im Recherchenbericht angeführtes Patentdokument | Datum der Veröffentlichung | Mitglied(er) der Patentfamilie | Datum der Veröffentlichung |
|---|---|---|---|
| EP 3079862 B1 | 14-02-2018 | CN 105813810 A | 27-07-2016 |
| | | DE 102013020490 A1 | 11-06-2015 |
| | | EP 3079862 A1 | 19-10-2016 |
| | | HK 1221686 A1 | 09-06-2017 |
| | | KR 20160096616 A | 16-08-2016 |
| | | WO 2015085987 A1 | 18-06-2015 |
| DE 102019125415 B4 | 12-08-2021 | KEINE | |
| EP 1485636 B1 | 22-04-2009 | EP 1485636 A1 | 15-12-2004 |
| | | US 2004149079 A1 | 05-08-2004 |
| | | WO 03078863 A1 | 25-09-2003 |
| DE 102023108107 A1 | 05-10-2023 | CN 220505695 U | 20-02-2024 |
| | | DE 102023108107 A1 | 05-10-2023 |
| | | FR 3134158 A1 | 06-10-2023 |
| KR 20180018123 A | 21-02-2018 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1905549 B1
- JP 3156145 U